# EUROPEAN PATENT SPECIFICATION

(11) **EP 3 959 575 B1**
(45) Date of publication and mention of the grant of the patent: **21.01.2026**
(21) Application number: 20795759.8
(22) Date of filing: 23.04.2020
(51) Int. Cl.: G05D 1/00

(54) **MOBILE PRINTING ROBOT AND PRINTING METHODS WITH LINE PRINTING PATHWAY OPTIMIZATION**
MOBILER DRUCKROBOTER UND DRUCKVERFAHREN MIT OPTIMIERUNG DES ZEILENDRUCKWEGES
ROBOT D'IMPRESSION MOBILE ET PROCÉDÉS D'IMPRESSION AVEC OPTIMISATION DU CHEMINEMENT DE L'IMPRESSION EN LIGNE

(30) Priority: 23.04.2019 US 201962837273 P
(43) Date of publication of application: 02.03.2022
(73) Proprietor: Dusty Robotics, Inc., Mountain View CA 94041 (US)
(72) Inventor: HERGET, Philipp, Josef, Sunnyvale, CA 94086 (US); LAU, Tessa, Ann, Sunnyvale, CA 94086 (US); HSIUNG, Shih-Chieh, Santa Clara, CA 95051 (US)
(74) Representative: D Young & Co LLP
(86) International application number: PCT/US2020/029592
(87) International publication number: WO 2020/219728

(56) References cited:
- KR-B1- 101 071 109
- US-A- 5 453 931
- US-A- 5 453 931
- US-A- 5 755 072
- US-A1- 2007 100 496
- US-A1- 2009 277 031
- US-A1- 2017 066 132

## Description

### CROSS-REFERENCE TO RELATED APPLICATIONS

This application claims priority to U.S. Provisional Application Serial No. 62/837,273, filed April 23, 2019.

### TECHNICAL FIELD

The present disclosure is related to mobile robot technology. More particularly, the present disclosure is related to mobile robots that can print markings on a horizontal surface.

### BACKGROUND

Mobile robots can be used for a variety of applications. One environment in which mobile robots could be used is a construction jobsite, where a mobile robot could perform a variety of functions in the environment. One such application is the printing of drawings, text, or other markings on a surface such as the concrete floor of a building under construction.

One of the challenges to building such a mobile printing robot is the precision at which the robot must deliver the markings. In the construction application, precision of less than 1/16" (1.6mm) is generally required. Mobile robot positioning is generally not this precise. The commonly-accepted algorithm for determining a robot's position ("localization") inside a space uses sensor readings (typically LiDAR) of the robot's distance from known landmarks such as walls. However, even top-of-the-line LiDAR units only report distance to within centimeter (cm) accuracy, limiting a robot's ability to determine its own position precisely.

The current practice of construction layout is to hire human crews to lay out building components, such as walls, ducting, and wiring, by physically marking the flooring surface. Locations are referenced off of plans generated by an architect, and delivered to the jobsite typically in large rolls of blueprints or in digital form on tablet computers. The typical layout process comprises using measuring tape to measure out distances from known landmarks such as concrete pillars, and tensioning chalk-covered string between two pins to mark straight lines. Other markings are done by annotating the surface using adhesive sticky dots, cans of spray paint, or permanent markers. Because human labor is expensive and errorprone, markings are generally limited to the basic information needed for subsequent labor crews to install framing and drywall, heating, ventilation, and air conditioning (HVAC), electrical wiring, plumbing or fixtures at marked locations.
US 2007/0100496 A1 discusses a robot system including at least one mobile robot for treating a surface, which comprises map storage means to store a map of the surface to be treated and means to navigate the, or each, mobile robot to at least one point on a surface. The, or each, mobile robot (10) comprises locating means to identify its position with respect to the surface to be treated and means to automatically deviate the mobile robot away from its initial path in the event that an obstacle is detected along its path. The, or each, mobile robot also comprises means to store and/or communicate data concerning the surface treatment performed and any obstacles detected by the locating means.
US 5,453,931 discusses a mobile robot for and a method of producing accurate physical layout and reference lines or performing work on a plane surface through cartesian coordinates or angle and distance systems is provided. The mobile robot has an on-board computer, a navigation system, and an emissions system. The robot is provided with a drive, for receipt of a floppy, or an internal drive, that can be programmed by an interested party directly or from a remote location by a plug-in. The program is loaded with locations that require treatment, work or equipment positioning. The robot locates and treats the coordinates with emission means, such as an ink jet type marking system, for workmen or for directly performing work at the coordinates.
However, neither of these documents disclose at least the following features of appended claim 1: selecting line pathways to navigate the mobile printing robot and print the set of lines, wherein the line pathway selection comprises splitting a line into line segments printable along opposite direction of motion of the mobile robot, and wherein the selecting of line pathways is chosen to optimize a percentage of the layout that is printed.

### SUMMARY

The invention is defined by the appended independent claims.

### BRIEF DESCRIPTION OF THE DRAWINGS

Figure 1 illustrates an embodiment of a mobile printing robot system.
Figure 2 is a block diagram of a mobile robot in accordance with an embodiment.
Figure 3 is a block diagram of a computing system in accordance with an embodiment.
Figure 4 is a flow chart of a method of printing with a robot in accordance with an embodiment.
Figure 5 is a flowchart of a method of printing fiducials in accordance with an embodiment.
Figure 6 is a flowchart of a method of detecting fiducials in accordance with an embodiment.
Figure 7A is a flowchart of a method line printing pathway optimization in accordance with an embodiment. Figure 7B is a variation of the flowchart of Figure 7A.
Figure 8 is a first flowchart of a method of performing line printing pathway optimization including line sorting, cropping, and splitting in accordance with an embodiment.
Figure 9 is a second flowchart of a method of performing line printing pathway optimization including line sorting, cropping, and splitting in accordance with an embodiment.
Figure 10A, 10B, 10C, and 10D illustrate an example of how line pathway optimization may be used to improve the percentage of the layout that can be printed by a mobile robot, and reduce the number of lines that a human has to complete in accordance with an embodiment.
Figures 11A, 11B, 11C, and 11D illustrate an example showing the improvements possible with the optimization algorithm, this time using a robot with a different arrangement of print heads.
Figures 12A, 12B, 12C, and 12D illustrate an example showing improvements using the optimization algorithm with obstacles on a construction jobsite
Figures 13A, 13B, 13C, 13D, and 13E illustrate an example in which markings are generated to aid in completing the layout.

### DETAILED DESCRIPTION

### Exemplary Mobile Printing Robot System

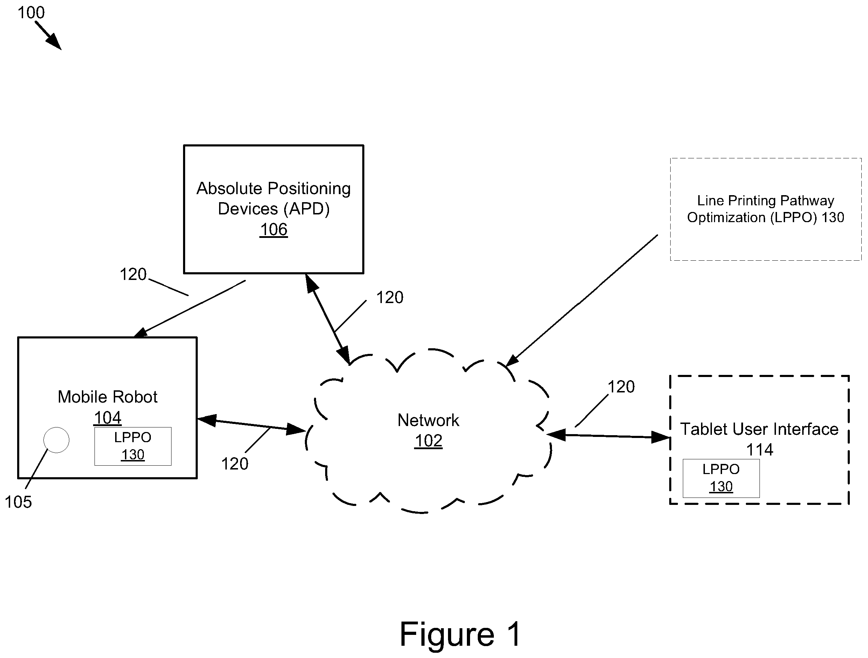

Figure 1 illustrates a mobile robot printing system 100 that comprises a mobile robot 104. The mobile robot 104 includes hardware and software to navigate around a construction site and print on a construction surface (e.g., a horizontal surface of a construction site, which for example, may be a concrete floor of a construction site).

One use of mobile robot 104 is to move around in a construction environment and print or otherwise form markings at specific locations. For example, a mobile robot 104 in one embodiment is a mobile printing robot that autonomously navigates and prints building layouts. For example, the mobile robot may print a building layout on a floor (e.g., a concrete surface) corresponding to an architect's plans for how a building is to be constructed. More generally, the mobile printing robot 104 may print other information on the floor besides a building layout.

In one embodiment, one or more absolute positioning devices (APD) 106 are provided that have a capability to accurately determine position/location. Some examples of APD approaches include a radio position measurement solution, such as those made by the Humatics Corporation. Other examples of APD approaches include optical position measurement solutions approach, such as the HTC Vive^{®}. In one embodiment, the APD comprises a total station or laser tracker that measures the angles and distance from the APD 106 to a point on mobile robot 104. This information permits an accurate determination of the location of the mobile robot 104. As one example, the APD 106 may be a total station that measures angles and distance. A Total Station (TS) is a type of APD 106 comprising a laser rangefinder on an actuated two axis gimbal, which generates a laser beam that reflects off a reflective device such as a prism. A TS typically uses an electronic transit theodolite in conjunction with electronic distance meter (EDM). It is typically integrated with microprocessor, electronic data collector and storage system. It measures the sloping distance of object to the instrument, including horizontal angles and vertical angles. In one embodiment, the APD includes a laser tracker to track a reflector mounted on the mobile robot.

A TS or laser tracker measures both the distance to the reflector as well as two angles of the reflector relative to the base station. Using these three measurements, the location of the reflector can be calculated relative to the location of the TS. Thus, assuming a TS is positioned at a given location in the building, the reflector's position in the building can be determined with respect to the location of the TS.

For example, a total station may be mounted on a tripod at a selected height above a construction surface. This then permits the total station to calculate horizontal and vertical angles to a point on the mobile robot 104, along with a distance measurement. From that information, an accurate determination of the absolute position of the mobile robot is calculated.

While a total station is one example of an APD, it will be understood that other optical or RF devices that determine angles or distance to a point on the mobile robot 104 may be used.

In one embodiment, the APD 106 measures the robot's location by using a laser, to detect the location of a reflector, prism, or similar retroreflective device 105, which can be affixed to the robot 104.

In one embodiment, a laser beam of the APD 106 transmits a laser beam that is directed in a line-of-sight path towards the retroreflective device 105.

In some embodiments, the APD 106 automatically tracks the movement of the mobile robot 104 such that it generates a series of position/location readings for the mobile robot 104.

The retroreflective device 105 may be any optical element or set of elements that reflects light back to its source over at least a certain range of angles, sometimes called a field of view, although there are other terms used in the optics art. In classical optics, a threecorner mirror having three faces is an example of a retroreflector. However, some prisms are retroreflective over a range of angles. There are also optical devices that have a set of facets that are retroreflective over a range of angles. There are also certain classes of retroreflective materials, such as certain retroreflective coatings. Some total stations also integrate with active reflectors having multiple sets of corner reflectors along with active electronics to prevent the total station from locking onto other reflective surfaces, such as safety vests. In some implementations, an active reflector is used in combination with the robot for accurate position measurements.

The retroreflective device 105 may be implemented as a 360-degree retroreflective device. Alternatively, it may have a narrower field of view but be rotated during use towards the APD to maintain a lock.

In some implementations, the measured location is communicated to the robot via a wireless communication network 120. There are many different ways that the measured location information may be communicated. However, a low-latency and low variable latency communication link is desirable. This is because there are various tradeoffs between the velocity of the mobile robot, the desired printing accuracy, and the effect of latency in the receipt of location information being useful to improving the accuracy of the printing of the mobile robot 104. For example, suppose the mobile robot 104 moves at a velocity of one m/s. That would, in turn, mean that a 1 ms communication delay would correspond to a 1 mm distance traveled by the mobile robot. If the objective was to achieve on the order of 1 mm printing line accuracy, then in this example the time delay in receiving the location information would be coming later in time than would be ideal for controlling the movement of the mobile robot 104. In some implementations, the controller of the mobile robot predicts a current location. For example, the mobile robot can handle long time in receiving location information by predicting its current location based on received instances of position data and associated timestamps.

The communication link 120 may use an existing network such as Wi-Fi^{™}. However, Wi-Fi^{™} can be subject to large delays in some locations, such as in cities in which there is a lot of Wi-Fi^{™} communication near a construction site. LPWAN (Low Power Wide Area Network) communication protocols such as Sigfox and LoRa, or other low frequency wireless communication protocols are possibilities. LoRa uses spread spectrum techniques to minimize interference. A local direct optical link is another possibility, such as using a separate laser beam (or Light Emitting Diode) to communicate location information on a direct link. A direct local radio frequency link is another possibility. In any case, a variety of different network communication technique or a direct communication channel using a radio or optical connection may be used as the communication link between the APD 106 and the robot 104.

In some embodiments, non-time sensitive information may be communicated using a different communication link. For example, a conventional wireless link, such as a Wi-Fi^{™} network link may be used to communicate non-time sensitive information.

In one embodiment, an optional portable computing device having a user interface 114, such as a tablet computing device having a user interface 114, may communicate with the mobile robot 104. In some embodiments, the optional portable device may also be in communication with the APD 106.

In one embodiment, a user or operator of the mobile robot 104 uses the user interface 114 of the portable device to access information related to the status of the mobile robot 104, access building information of a building information model (BIM) or CAD model, or enter commands to the mobile robot.

The BIM or CAD model generally contains all information about the building including the line segments providing the outline of the walls to be built and the walls that are already existing in the site. This BIM or CAD can be used to generate a map on which the robot navigates and may contain a set of obstacles that the robot expects to encounter when drawing the wall outlines onto the floor.

Also, as construction proceeds, there may be a variety of obstacles present on the construction site that cannot be generated from the BIM. This can include obstacles to the safe movement of the mobile robot, such as pallets left on the construction site. But it may also include other aspects of the construction, such as piping, wiring, etc.

The presence of obstacles may also prevent the use of an APD 106 requiring a direct line-of-sight. For example, if the mobile robot 104 moves behind a post, a pallet left on the construction site, or a wall, then an APD based on a line-of-sight may become temporarily ineffective.

As discussed below in more detail, line printing pathway optimization (LPPO) 130 engine optimizes the printing of lines of a layout. The optimization may, for example, take into account various constraints on the mobile robot's printing capabilities and ability to traverse a jobsite due to its own capabilities and any obstacles at the jobsite. Some examples include sorting lines, splitting lines, and cropping lines. The LPPO 130 engine may be implemented offline and provide final results to the mobile robot. However, in some implementations, the LPPO 130 engine may be implemented on a local computing device 114 or on the mobile robot 104.

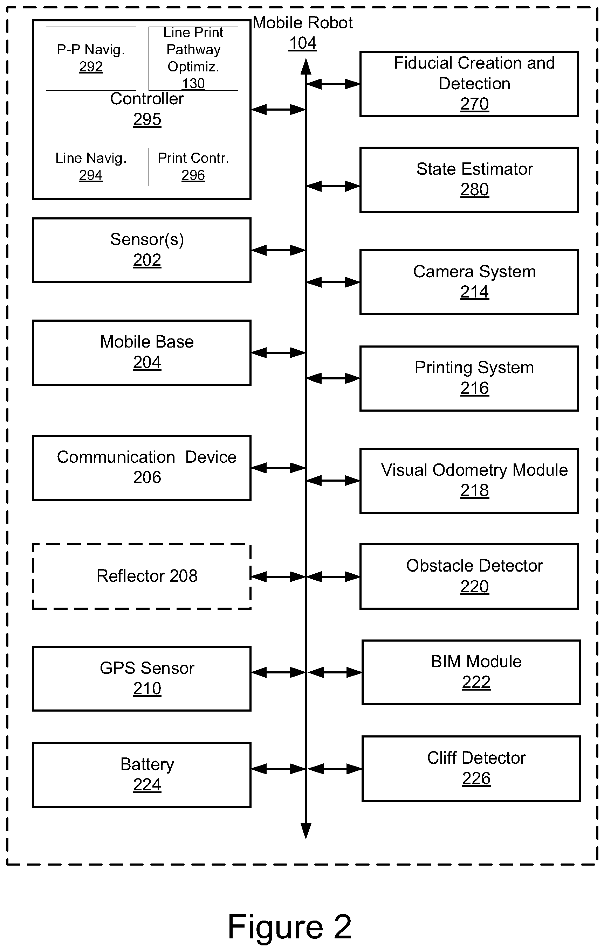

As shown in Figure 2, one implementation of the mobile robot 104 comprises a controller 295; one or more sensors 202, one of which may be an IMU, accelerometer, gyroscope, or compass; a mobile base 204 including features, such as motors and wheels to move the mobile robot; a communication device 206; a reflector 208, a GPS sensor 210, a battery 224, a cliff detector 226, a BIM module 222 to access BIM or CAD data, an obstacle detector 220 (which may include a depth camera or a lidar), a visual odometry module 218, a printing system 216, a camera system 214 having one or more cameras, a state estimator 280, and a fiducial creation and detection module 270. In one embodiment, the communication device 206 implements a wireless communication link with the APD 106 and/or the optional portable device 114.

In one embodiment, controller 295 includes a point-to-point navigation controller 292, a line navigation controller 294, and a print controller 296. The point-to-point navigation controller utilizes a control technique to navigate between two points, such as points "A" and "B" but does not define a fixed path to get from "A" to "B." In point-to-point navigation, there is no rigid constraint requiring the mobile robot to precisely move in a straight line from A to B. This mode of navigation has a variety of advantages, including allowing the mobile robot to efficiently navigate around obstacles. In one embodiment, the line navigation controller 294 is a path following controller. For example, a fixed path between points "C" and "D" for the line navigation controller 294 to follow is selected. For example, a path between points C and D may include a straight line, curved line, or combinations of straight lines and curved lines. In one embodiment, the path following controller is used to perform printing passes.

In one embodiment, the printing system 216 includes a printhead. However, more generally, the printing system 216 may include a movable print head or a selection of two or more different print heads.

In one embodiment of the system 100, the robot 104 uses the camera data from camera, lidar, or depth camera to track its relative position in the building and periodically receives updates with total station data to remove the drift from the camera data and provide corrections to its position estimate.

In some implementations, a state estimator 280 combines available location information to generate an estimate of the most likely position of the mobile robot at a given time based on combining information from all available sources. This can also be described as "sensor fusion" in that the state estimator 280 generates an estimate of the most likely position and orientation of the mobile robot that takes into account the latency of each data source, the accuracy limitations of each data source, and information over a previous window of data. For example, an APD 106 may provide accurate location information but be subject to communication time delays of network 102 or generate data infrequently. Also, an APD 106 may be temporarily unavailable if the line of sight is temporarily lost, such as when the mobile robot moves behind a post, a wall, or an obstacle. Local sensors 202 and 218 may have less latency than an APD, but may also be less accurate, particularly if relied upon for an extended period of time. GPS sensor 210 may be capable of providing location data in some construction sites but not others.

The state estimator 280 generates a best estimate of the mobile robot location and orientation that takes into account the availability and limitations of different types of data, as well as information on a sequence of recent location measurements. For example, the state estimator 280 may use a sensor fusion algorithm based on statistical weighting techniques.

The robot's onboard sensors 202, 210, and 214 track its own location. Sensors 202 may include any common robot sensors including Lidar, radar, time of flight, depth or other 3D cameras, sonars, etc. For example, cameras 214 may be mounted on the robot 104 in various directions to observe its environment and determine its position as it moves. A visual odometry module 218 supports visual odometry. One technique of particular interest is using algorithms known in the state of the art under the term "visual odometry" (VO). These algorithms track the relative motion of an object using the motion of images captured by the camera system 214. Since these systems track relative motion, they are accurate over short to medium distances, but suffer from slow drift when tracking over larger distances.

The mobile base 204 may be implemented using a variety of different drive technologies, including holonomic implementations with omni-directional wheels and non-holonomic implementations in which the wheels are not omni-directional. Non-holonomic drive systems, such as with differential 2-wheel drive, sometimes known as a differential wheeled robot (DWR), are typically cheaper to implement than a robot with true omni-directional drive (e.g., "omni" wheels or "Mecanum" wheels). However, DWR implementations have more difficulties achieving precise navigation. In some implementations, the navigation is switched from point-to-point navigation to line navigation when conducting a printing pass.

In one implementation, the robot 104 relies primarily on data from an APD 106 when available, and onboard sensors 202 when absolute position information is not available. For example, a mobile robot 104 navigating on a construction site may have line of sight to a TS temporarily occluded by a concrete pillar as it drives past the pillar. Using this implementation, a robot 104 could calculate its location using the TS while it's visible, fall back on visual odometry using its visual odometry module 218, or other sensors, while the visual connection is lost, and resume use of the TS-based location once it reappears in view.

In some implementations, the robot 104 uses the images from multiple cameras 214 to create a very precise estimate of its movement through the space. For example, the robot 104 may have a downward facing camera located at the front and back of the body 204, and/or at the two side edges of the robot 104. In this configuration, each camera needs enough magnification to resolve the fine detail in the driving surface. As an example, the fine detail of the grains in the cement can be used to uniquely identify a location. This can be done with any surface that requires layout markings, as long as the surface has enough detailed features. Examples include cement, tile, wood, or temporary floor coverings such as Ram Board.

In some implementations, a fiducial creation and detection module 270 is used to coordinate actions of the mobile robot to generate fiducials (e.g., fiducial marks) and later use the printed fiducials. As an example, a fiducial may be used to aid the mobile robot to compute its precise location.

In one embodiment, the robot 104 moves in the forward direction, images collected from the back camera are compared to images collected by the front camera at the same location. By finding the precise alignment between the two images, and knowing the precise distance between the two cameras, the robot 104 can measure the distance it has moved between acquiring the two images. Similarly, by observing the motion as measured by the left and right cameras, the robot can track its angular orientation precisely.

In one implementation, a printing robot 104 also comprises a detector 220 that detects the presence of obstacles. Any number of sensors commonly used in robotics for obstacle detection can be employed. Some examples include 3D depth cameras such as the Intel RealSense, time of flight sensors, 2D LiDAR, sonar, radar, signal point optical sensors, or mechanical sensors used for bumper and mechanical collision detection. Sensors can also be employed to detect a cliff such as an empty elevator shaft, stairway, or edge of a building where the walls are not yet constructed. When the robot detects an obstacle, the robot may choose to drive around the obstacle such that the area under the obstacle is not printed on. If the obstacle is large it may not continue in that portion of the building. It may also notify an operator about the presence of the obstacle such that it can be cleared and a good print quality can be achieved. For small holes such as penetrations, the robot can drive over the obstacle such that its wheels straddle the penetration, allowing it to print an alignment mark over the penetration so the location of the penetration can later be checked.

General information on the lines and other features to be drawn may be obtained from the Building Information Models (BIM), CAD, or other architectural drawings. These may be represented in many forms, such as a Revit model, or a DXF or DWG file. However, they may also be represented in any proprietary file containing a list of lines or other objects.

The features to be drawn may include combinations of lines, letters, numbers, and symbols. For example, in some implementations, the lines and features correspond to images to be printed by a printhead of the print system. A printhead permits printing not only lines, but letters, numbers, and symbols. This permits, for example, a line to be drawn along with any letters, numbers, or symbols that be useful at a construction site. The determination of the features to be drawn may be processed by another computing entity and then received by the mobile printing robot controller. However, more generally, a version of this relevant BIM/drawing information may be stored in the controller 295 along with information corresponding to an obstacle map. In some implementations, this version may include two files with the first file describing the lines to be drawn and the second file describing obstacles to be avoided. For example, the obstacle map may include features derived from the BIM/drawing information as well as additional obstacle information collected on the construction site. The lines to be drawn may be a subset of the lines in the BIM that represent one layer or one area to be printed.

In one application of mobile printing robot technology, a robot 104 is used to generate markings on a horizontal surface of a building under construction, where such markings correspond to information extracted from a digital model of the building under construction, such as architectural drawings, Building Information Models (BIM), or Shop Drawings created by individual trades. Such drawings are typically drawn up by architects or others who design the building to be built. In current practice, these drawings are typically printed on large sheets of paper and given to workers in the field, who have the responsibility for marking pertinent information from the drawings onto the surface of each floor under construction. These marks may take the form of lines (e.g. to denote the locations of framing tracks for interior walls), points (e.g. to denote locations where ductwork will be hung from the ceiling or recessed lighting is to be installed), or text (e.g. to distinguish where fire-rated vs regular drywall is to be hung).

A mobile printing robot 104 that generates the correct markings on the surface must first extract the pertinent information from a digital model, such as using an Application Programming Interface (API) to access the model, or by reading the model into memory and extracting features and points of interest from the model. This extraction may be done on a robot, or it may be done in a separate computing system, such as the tablet computer 114, or located offsite or in the cloud, and communicated to the robot using some form of network. For example, this may be done by a BIM module 222 that is operational on the robot 104, or it may be done by a BIM server (not shown) located on the same network 102 as the robot 104.

During the construction process, the BIM model may be changed to reflect changes in the desired design of the building, or to accommodate conflicts observed during the building process. When these changes occur, it is desired to update the markings on the floor so that the construction crews work off of the latest information. In one implementation, a mobile printing robot 104 is able to update previous markings by first covering the surface with likecolored material (such as concrete-colored paint) and then generating a new set of markings on top of the colored material, effectively "erasing" the original markings and replacing them with new ones. In another implementation, a mobile printing robot 104 keeps track of the markings that have previously been generated, compares the old markings against the current set of markings, and only erases and re-generates the markings in areas where there is a difference between the old and the new markings. In one implementation, a robot uses a camera or other sensing device to perceive the old markings on the floor for comparison with the desired markings. In another implementation, a robot remembers what has been previously printed, and compares its memory of the previous printing run with the new markings that are to be printed, in order to calculate the areas to be erased and re-printed.

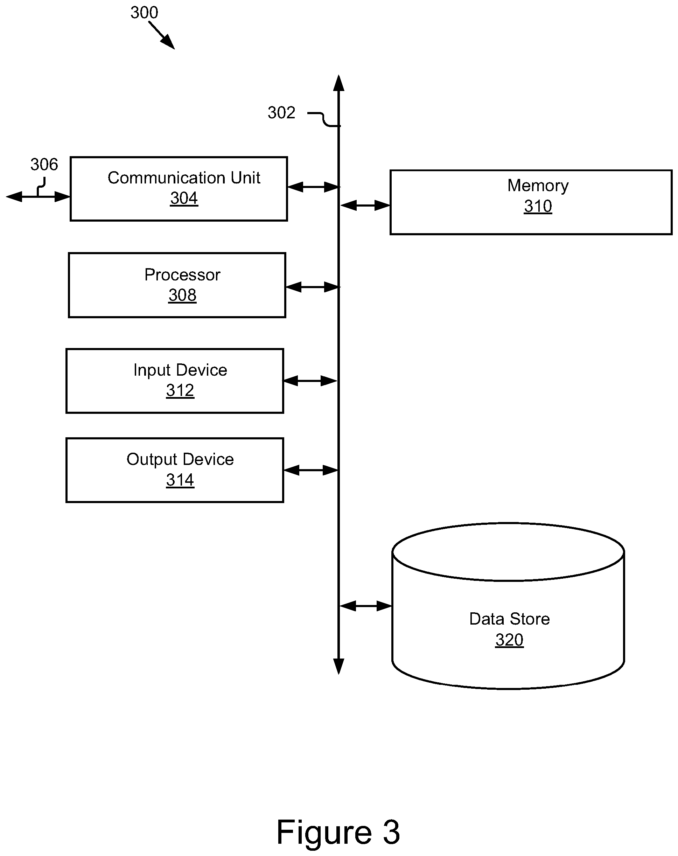

Figure 3 is a block diagram of an example computing device 300, which may represent a computing device configured to implement modules depicted in Figures 1 and 2, depending on the implementation.

As depicted, the computing system 300 may include a processor 308, a memory 310, a communication unit 304, an output device 314, an input device 312, and a data store 320, which may be communicatively coupled by a communication bus 302. The computing system 300 depicted in Figure 3 is provided by way of example and it should be understood that it may take other forms and include additional or fewer components without departing from the scope of the present disclosure. For instance, various components of the computing device may be coupled for communication using a variety of communication protocols and/or technologies including, for instance, communication buses, software communication mechanisms, computer networks, etc. While not shown, the computing system 300 may include various operating systems, sensors, additional processors, and other physical configurations. The processor 308, memory 310, communication unit 304, etc., are representative of one or more of these components.

The processor 308 may execute software instructions by performing various input, logical, and/or mathematical operations. The processor 308 may have various computing architectures to method data signals (e.g., CISC, RISC, etc.). The processor 308 may be physical and/or virtual, and may include a single core or plurality of processing units and/or cores. In some implementations, the processor 308 may be coupled to the memory 310 via the bus 302 to access data and instructions therefrom and store data therein. The bus 302 may couple the processor 308 to the other components of the computing system 300 including, for example, the memory 310, the communication unit 304, the input device 312, the output device 314, and the data store 320.

The memory 310 may store and provide data access to the other components of the computing system 300. The memory 310 may be included in a single computing device or a plurality of computing devices. In some implementations, the memory 310 may store instructions and/or data that may be executed by the processor 308. For example, the memory 310 may store instructions and data, including, for example, an operating system, hardware drivers, other software applications, databases, etc. which may implement the techniques described herein. The memory 310 may be coupled to the bus 302 for communication with the processor 308 and the other components of computing system 300.

The memory 310 may include a non-transitory computer-usable (e.g., readable, writeable, etc.) medium, which can be any non-transitory apparatus or device that can contain, store, communicate, propagate or transport instructions, data, computer programs, software, code, routines, etc., for processing by or in connection with the processor 308. In some implementations, the memory 310 may include one or more of volatile memory and non-volatile memory (e.g., RAM, ROM, hard disk, optical disk, etc.). It should be understood that the memory 310 may be a single device or may include multiple types of devices and configurations.

The bus 302 can include a communication bus for transferring data between components of a computing device or between computing devices, a network bus system including the network 102 or portions thereof, a processor mesh, or combination thereof, etc. In some implementations, various components operating on the computing device 300 (operating systems, device drivers, etc.) may cooperate and communicate via a communication mechanism included in or implemented in association with the bus 302. The software communication mechanism can include and/or facilitate, for example, inter-method communication, local function or procedure calls, remote procedure calls, an object broker (e.g., CORBA), direct socket communication (e.g., TCP/IP sockets) among software modules, UDP broadcasts and receipts, HTTP connections, etc. Further, any or all of the communication could be secure (e.g., SSH, HTTPS, etc.).

The communication unit 304 may include one or more interface devices (I/F) for wired and wireless connectivity among the components of the system 100. For instance, the communication unit 304 may include, but is not limited to, various types of known connectivity and interface options. The communication unit 304 may be coupled to the other components of the computing system 300 via the bus 302. The communication unit 304 can provide other connections to the network 102 and to other entities of the system 100 using various standard communication protocols.

The input device 312 may include any device for inputting information into the computing system 300. In some implementations, the input device 312 may include one or more peripheral devices. For example, the input device 312 may include a keyboard, a pointing device, microphone, an image/video capture device (e.g., camera), a touch-screen display integrated with the output device 314, etc. The output device 314 may be any device capable of outputting information from the computing system 300. The output device 314 may include one or more of a display (LCD, OLED, etc.), a printer, a haptic device, audio reproduction device, touch-screen display, a remote computing device, etc. In some implementations, the output device is a display which may display electronic images and data output by a processor of the computing system 300 for presentation to a user, such as the processor 308 or another dedicated processor.

The data store 320 may include information sources for storing and providing access to data. In some implementations, the data store 320 may store data associated with a database management system (DBMS) operable on the computing system 300. For example, the DBMS could include a structured query language (SQL) DBMS, a NoSQL DMBS, various combinations thereof, etc. In some instances, the DBMS may store data in multidimensional tables comprised of rows and columns, and manipulate, e.g., insert, query, update and/or delete, rows of data using programmatic operations.

The data stored by the data store 320 may be organized and queried using various criteria including any type of data stored by them. The data store 320 may include data tables, databases, or other organized collections of data.

The data store 320 may be included in the computing system 300 or in another computing system and/or storage system distinct from but coupled to or accessible by the computing system 300. The data stores 320 can include one or more non-transitory computer-readable mediums for storing the data. In some implementations, the data stores 320 may be incorporated with the memory 310 or may be distinct therefrom.

The components 304, 308, 310, 312, and/or 314 may be communicatively coupled by the bus 302 and/or the processor 308 to one another and/or the other components of the computing system 300. In some implementations, the components 304, 308, 310, 312, and/or 314 may include computer logic (e.g., software logic, hardware logic, etc.) executable by the processor 308 to provide their acts and/or functionality. In any of the foregoing implementations, these components 304, 308, 310, 312, and/or 314 may be adapted for cooperation and communication with the processor 308 and the other components of the computing system 300.

### Printing and Fiducial Examples

In one implementation the mobile robot 104 contains one or more marking devices, like a spray nozzle, in a fixed location. In another implementation the marking devices are on a single axis stage. However, having few marking devices at a fixed or moving position has downsides. If the marking device (part of a printing system 216) is mounted in a fixed position on a robot 104, then that robot 104 must be positioned at a precise location in order to be able to generate marks at precise locations. Positioning a robot 104 precisely is very challenging and requires extremely precise feedback control systems, which can be challenging and expensive to build. A system with moving spray nozzles also has the disadvantage of requiring a second control system with mechanical limitations.

In one implementation, a robot 104 is designed with a printing component (part of a printing system 216) that enables fast control of the ink locations. With this system, markings are laid down in a precise position even if a robot 104 is not able to control the robot body to the precise location where the markings are to be printed. For example, an inkjet printer head could be used as a printing component. Such a printing component generally comprises a series of nozzles in an array 217 that emit ink, mounted linearly along the length of an assembly, and allowing for electrical actuation of individual print nozzles in the assembly. With the ability to turn on or off one or more print nozzles, a robot 104 that is located with its center proximal to the location where a mark is to be made could electrically control the appropriate nozzles to cause a mark to be generated at the correct precise location.

In a robot printing application, both the velocity and the robot's position transverse to the desired path are changing.

In one implementation, a robot comprises an inkjet printing system 216 having a firing pattern controller 219 that receives compensation inputs for both the velocity of the robot (the x position), and the transverse position of the robot with respect to the desired location of the printed features (the y position). When the y position changes, the firing sequence sent to the printheads is shifted proportionally, such that the image lands on the correct area of the floor.

In another implementation a controller 295 includes a print controller 296 that makes printing decisions. In one implementation, it computes or receives information about the position of the robot 104 with respect to the surface the robot 104 is traveling on. For example, the control system may receive position information (e.g., location and orientation) from state estimator 280. The controller 295 uses this information to instruct the firing pattern controller 219 to fire each of the print head nozzles to produce an image on the ground in a specific location.

In another implementation the robot 104 has one or more nozzles mounted on high speed linear actuators, such that the frequency response of the positioning system moving the nozzles is high even though the robot is slow to correct it's position.

In one implementation, a mobile robot 104 includes a positioning measurement system (using some combination of APD and/or VO) and a printing component, such that the measured position of the robot is used to fine-tune the output of the printing component such that a designated pattern of markings is laid on the floor at a precise location as the robot drives past.

In construction layout, one of the most common features is the outlines of the wall segments, which consist of two parallel lines that denote the location of the bottom track used to construct each wall. In yet another implementation the robot 104 is outfitted with two printheads positioned such that each head draws one of the two parallel lines of the wall segments. To print accurately, the robot 104 needs only to control its position within the width of the print head. For example, if the bottom track is 3 ¼ inches, the robot 104 could be designed with two ½ inch wide print heads spaced at a center to center distance of 3 ¼ inches. When the robot drives to print the two lines, it needs to keep the printheads over the intended location of the lines. The robot 104 therefore needs to control its position to +/- ¼ inch.

In another implementation, the robot 104 comprises two printheads with one or more of the print heads located on actuators such that the spacing of the heads can be varied. This allows the robot 104 to select between different wall thicknesses. In yet another implementation, the robot 104 comprises two print heads spaced at the center to center distance of a wall, and a third printhead placed between the first two, such that text can be printed inside the wall outline. This third print head may be centered such that the text can be printed in the center of the wall segment.

In another implementation the robot has one or more printheads located near the center of the robot, plus an additional narrow width printhead located at the edge of the robot, preferably outside of the span of the wheels. This configuration allows the robot to print proximate to walls, holes, or other features located on the construction site.

Inkjet print heads come in a variety of widths. The widths typically vary from ¼ inch, to very larger print heads that span several inches. To create images larger than the width of the print head, printers typically create the image using several passes. Using this technique requires precise alignment between each of the passes to render a continuous image. The alignment is typically smaller than the dot pitch of the print head. For example, for a 600 dpi head, the required alignment would be less than 1/600 inch or 42um. Without this precision the two passes would either be separated by a gap or overlap, leaving a visually distorted image.

For a construction layout, the typical required tolerances are greater than 1/16 of an inch or 1.6 mm. One option to maximize the visual appearance of the robotic printed images is to print continuous features in a single pass. However, the features may also be printed in multiple passes.

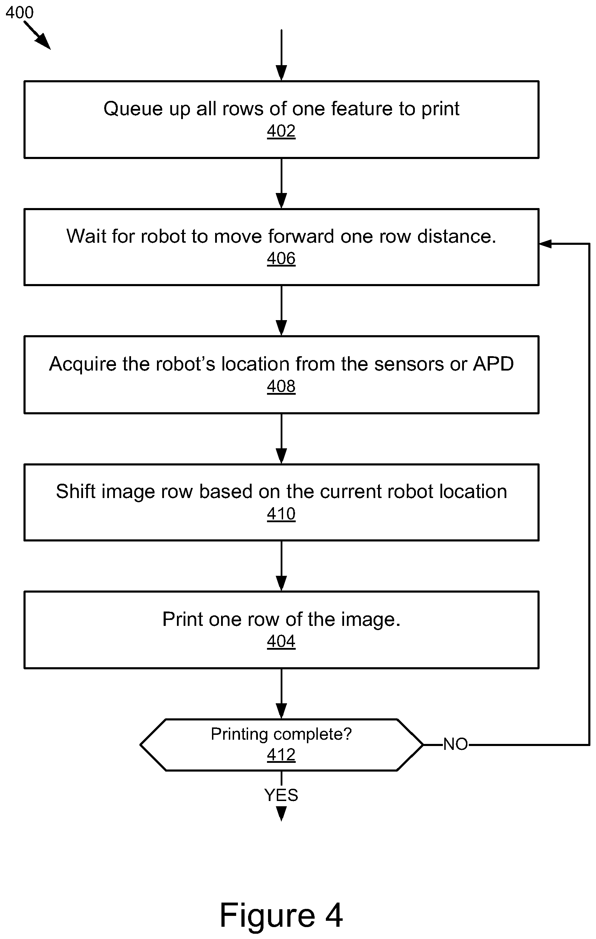

One example implementation of a method for printing with a robot is shown in Figure 4, which may for example be implemented in a print controller 296 of controller 295. An image to be printed has features that are represented as a set of rows of pixels that are printed one row at a time as the robot is moved forward. For example, an image to be printed may be a feature that is a straight-line segment that has a starting point, an ending point, and a line width. However, more generally the features may be more complex than simple lines. There are different possible technical implementations of an image buffer for an image to be printed. The controller 295 may, for example, have its own image buffer. However, more generally the printing system 216 may receive printing commands and data and have its own local image buffer in which it locally buffers images to be printed.

In block 402, all of the rows of a feature are queued up to print. For example, an image to be printed may correspond to pixels arranged in rows in an image buffer. In block 406, a wait phase may be included to wait for the mobile robot to move forward one row distance. In block 408, the mobile robot's location and orientation may be acquired (e.g., from the sensors, the APD, or the state estimator) to confirm the current location. In block 410, the image row in the image buffer is shifted based on the current robot location. In block 404, one row of the image is printed. In block 412, a determination is made if the printing is completed. If not, the process loops back to block 406. Otherwise the printing completes.

In the example of Figure 4 the location information is checked prior to printing each row of pixels. This illustrates a basic form of synchronization of the printing of an image with the motion of the mobile robot.

The overall printing may also be organized in a sequence that facilitates accurate printing, such as organizing the printing into a set of single-pass printings. In one implementation, a software extraction process identifies continuous features to be printed in a single pass. Examples include a wall segment, a line of text, or a marking indicating an electrical, plumbing, or HVAC feature. These continuous features are delivered to the robot 104 separately to be printed in one continuous pass. For example, two perpendicular walls would be printed by printing the layout of one wall section in a first pass and then orienting and driving the robot in a perpendicular direction to print the next wall section.

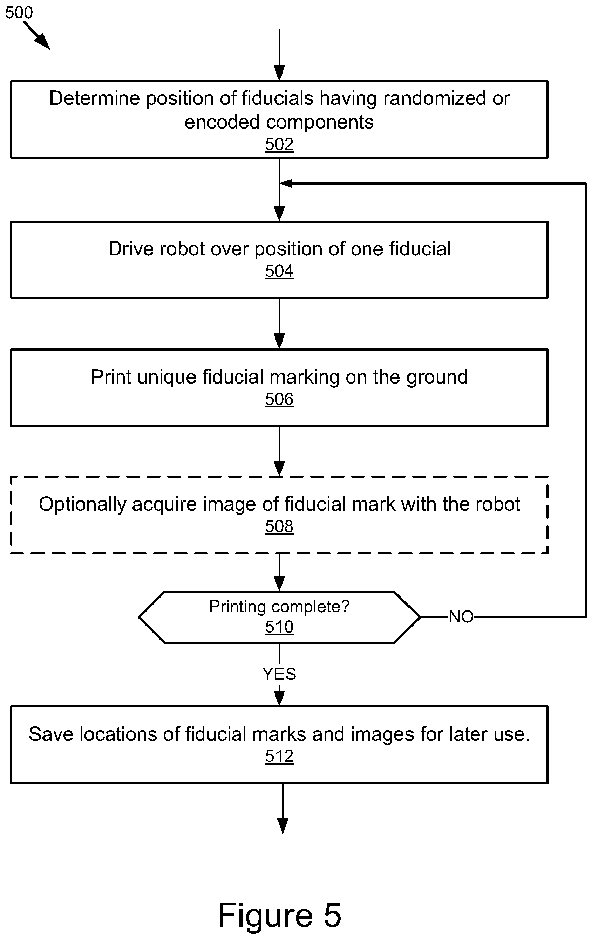

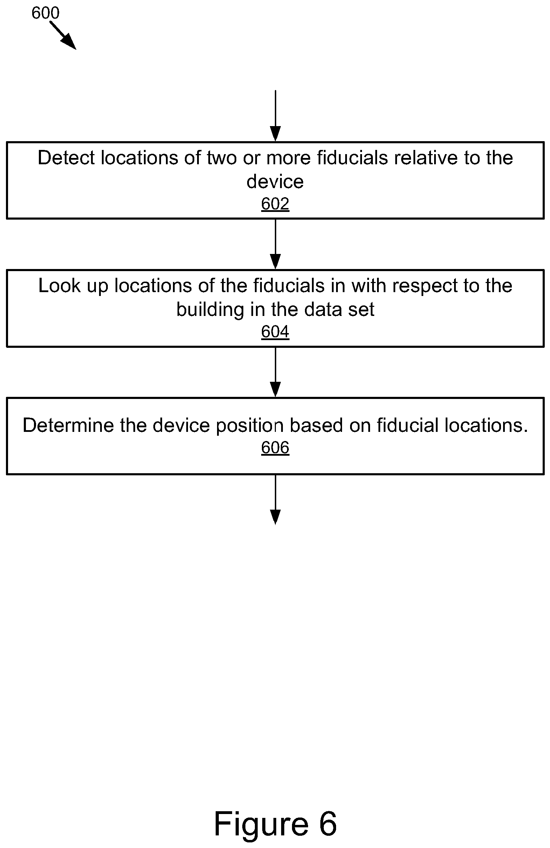

Figure 5 is a flowchart of a method printing fiducials in accordance with an embodiment. Figure 6 is a flowchart of a method detecting fiducials in accordance with an embodiment. Additional details of printing and detecting fiducials associated with Figure 5 and 6 are described in more detail in U.S. Pat. App. No. 16/691,413 "Mobile Printing Robot and Printing Method," Filed November 21, 2019.

Yet another problem with printing a layout to a construction site is the presence of obstacles that block access to a portion of the flooring. These obstacles can include tools and materials that have been delivered or left out on the job site. However, another important type of obstacle are support structures used for the construction process. In a building using poured concrete, construction on the next floor of the building commences immediately after the current floor is finished. As soon as the concrete has set, materials for the next floor's formwork are brought onto the slab, and formwork is erected. After that, those materials are brought in for constructing the framing and walls in the floor. Typically, layout is performed after the formwork support structures are removed, but when many materials and tools needed for the interior construction have already been delivered to the floor. To complete the layout, the layout crews may move these materials around as they mark the floor.

In one implementation, the robot is programmed to mark the location of all penetrations and embeds. One way this can be accomplished is by printing alignment marks (like a "+" or an "X", or a line) over top of the feature, such that the center of the feature can be visually identified. This may also include text to denote what type of feature it is. For embedded features at the edge of the building, the robot can print marks on the interior indicating where the outline or major points of the embedded feature should be located. Using these printed marks, a human can later quickly determine if the features are located in the correct location. In another implementation, the robot will additionally take an image of the feature after the alignment marks have been printed, such that a remote operator can quickly determine if all the features are located correctly. In yet another embodiment, image recognition is used on a set of images taken at the location of the expected features including penetrations, or other embedded features, to determine if the features have been located properly. This may be performed independently or in combination with printing markings over the same features.

In one implementation the robot works around the areas that are physically inaccessible, but saves data indicating which portions of the layout have and have not been completed. Then at a later time, when supports have been removed, or when materials have moved around, the robot can revisit the site and print in the areas that were previously accessible. To accomplish this the robot can make use of QR codes that it printed onto the floor for precise localization without the need for a TS or APD.

In one implementation, the mobile robot system keeps track of what portion of the layout that the mobile robot was unable to print and generates a report. A report on what portions of the layout could be not be printed permits, for example, options for the obstructions that prevented printing to be removed to permit the mobile robot to finish its work at a later time. As another example, the report may be used by a human user to finish portions of the layout at a later time, such as after supports are gone. The report may be generated by the mobile robot itself or in combination with other components of the system. For example, the mobile robot may generate raw information that the mobile tablet computing device utilizes to generate a report for human users.

### Additional Printing Applications

Mobile printing robots can be used for other purposes in construction other than marking layout from digital building models. These additional applications may improve the efficiency of a construction project or enable other robots to effectively function in the space.

Quality control on a construction site is typically done by having workers follow checklists of steps to ensure that they have done their work correctly. These checklists may be stored on paper, displayed in mobile apps, or be memorized by more senior workers. In one implementation, a mobile printing robot 104 can be used to print such quality control checklists on the floor near where the work is being done, to remind workers of the correct process and convey the status of the project.

Framing and millwork contractors are responsible for framing walls and installing cabinetry in a building under construction. For example, where upper cabinets are to be hung in a kitchen, additional crosswise framing members must be installed to support the additional load of those cabinets on an interior wall. Architects and project managers typically communicate the desired plan through "elevations": 2D renderings of the finished cabinet installation, from different angles (e.g. facing front and top-down). These renderings are given to the workers, who must install the framing and cabinets in the correct configuration to match the drawings.

Furthermore, throughout the construction process, materials used for construction are delivered to each area that labor is being performed. These materials are generally assembled into numerous kits that each of the trades uses to finish the work for an area of the building. The coordination of assembling and delivering the kits is a manual process tracked on paper.

In one implementation, a mobile printing robot 104 is used to print such elevation drawings directly onto the floor near where the work is to be done, thus giving the crew the information they need to build correctly without having to search for that information onsite.

In another implementation, a mobile printing robot 104 is used to print part numbers (e.g. as printed text or as QR codes) next to parts that are to be installed, so that workers are able to see which part they are supposed to install where, thus reducing errors in building that can lead to costly rework.

In another implementation, a mobile printing robot 104 is used to print locations and kit number, aiding in the process of distributing and tracking construction materials.

### Optimizations of Selection of Line Segments and Directional Orientation

To ease description, the use of words "lines" or "line segments" in the text may be referred to the features and markings described in the previous sections. These features may be extracted from the BIM model, human operator inputs, and other means of defining the features being printed.

General information on the lines to be drawn may be obtained from the BIM or architectural drawings. However, the mobile printing robot has constraints on its printing capabilities. Some of these constraints arise on the arrangement of its print heads. Also, a mobile robot may have a preferred "forward" direction for moving and printing based on its drive system and other considerations, such as the location of obstacle detectors, sensors, bumpers, etc. Additionally, there are printing constraints based on the physical size and shape (contour) of the mobile robot. For example, various factors determine how closely a print head of mobile printing robot can be driven towards a wall or a pillar. And a construction site may include existing structures, such as pipes, that may be obstacles to the movement of the mobile robot. Additionally, there may be other obstacles on a construction site, such as pallets left on the construction site.

A particular mobile robot 105 has a particular configuration of its print heads of printing system 216 on the robot. For example, the printer(s) may be disposed near the front, back or center of the robot relative to a longitudinal axis of the robot and/or located more towards the left side, center or right side of a horizontal axis of the robot. Moreover, the robot itself may have a rounded or tapered profile such that its drive characteristics and turning characteristics may be different between the forward and reverse directions of travel of the robot.

While there are unidirectional drive systems, more generally a robot may have a preferred forward direction of movement with respect to its drive mechanism and sensor locations. For a given line to be printed, this means that there are two directions along the line that the mobile robot can traverse in a "forward" direction and print. For example, a line from point A to point B could be printed with the robot traveling in a first directional pathway traveling from point A to B or in second directional pathway from B to A.

The arrangement of the print heads on the robot is a factor in how closely the mobile robot can print next to a wall for particular selections of the direction of the movement of the mobile robot along a line and how the mobile robot is oriented with respect to that direction of movement. A mobile robot may, for example have a contour with a front face, back face, left-side, and right side. For example, the print head may be located at the bottom-front of the mobile robot, the bottom rear of the mobile robot, or on a left-side or right-side of the mobile robot.

As previously discussed, a mobile printing robot may not be designed to travel or print in two directions, as it would require sensors and bumpers on both sides of the robot, which adds cost and complexity. In some cases, the mobile robot is designed to print in a "forward" or preferred direction of movement with respect to a front face of the mobile robot. This restricts the printing of an entire line (in a single pass) to two possible directions of movement with the robot facing in two different directions. For the case of two points A and B, that means either printing from A to B OR from B to A. In this example, the front face of the mobile robot is facing towards the destination point (assuming the mobile robot has a preferred printing orientation and is not designed to also support printing with the back face facing towards the destination point).

In some cases, a line is printable, within some standard of closeness to the wall, only for one direction, e.g., from A to B but not B to A. However, in other circumstance, the line may be printable, with the same standard, for both directions, e.g., from either A to B or B to A. That is, a line may be printable in a unidirectional manner or in a bidirectional manner. Yet another possibility is that the same line is not printable, within the printing standard, unless it is split up into smaller line segments that are separately printed with the mobile robot moving in a direction of travel optimal for printing each individual smaller line segment. For example, a line from A to B may be split into line segments A to C and C to B. This permits, for example, printing from A to C and then from B to C. It also permits printing from C to A and From C to B.

For example, if the print heads that have a horizontal asymmetry that are located more on the left or the right, then this introduces a directional effect. For this case, when the mobile robot is driven parallel to a wall along a line from point C to point D, a horizontal asymmetry in the location of the print heads may mean that one directional pathway of travel from point C to point D may bring the print heads closer to the wall than the other directional pathway that could be taken from point D to point C. For example, if the print heads are located on the left of the mobile robot, then one directional pathway of travel parallel to the wall brings the print heads closer than the other directional pathway of travel.

There are thus a variety of constraints on the robotic system that can be taken into account to optimize the printing of a layout. In one embodiment, optimization of the line drawing is performed that takes into account the constraints of the robotic system, the location of walls, existing structures, obstacles, and other considerations.

In one embodiment, some of the considerations include identifying an arrangement of the print-heads on the robot, the profile of the robot, and making a set of determinations on how to optimize the directional line pathways for printing of lines. The optimizations can be selected based on printing lines as closely and accurately as possible to the plan (e.g., draw lines as close to a wall or obstacle as practical), draw a maximum percentage of the layout within some pre-selected printing standard, reduce the total time required for printing, or for other objectives.

As previously discussed, line printing pathway optimization (LPPO) may be performed that takes into account various constraints on the capabilities of the mobile printing robot and any obstacles at the jobsite. In some implementations, LPPO takes an initial listing of lines to be printed, analyzes constraints on printing, and implements one or more optimizations.

Examples of these optimizations may include ordering the set of lines optimally, such that the robot can complete all the lines in the minimum amount of time. The ordering may include one or both of 1) the sequence in which the lines are printed and 2) the direction in which the lines are printed. The optimizations may determine that certain lines can only be successfully printed in one direction. For example, a line between points A to B may, in some case, only be printed in the one direction from A to B to fully print the entire line. However, in many cases, individual lines are fully printable for either direction of printing, such that they may be successfully printed from A to B or B to A. Suppose, as an example, there is layout with lines L1, L2, and L3 that can only be fully printed in one printing direction. Suppose that other lines, such as lines L4, L5, L6, L7, L8, L9 and L10 can be fully printed in either printing direction. In this example, the overall printing time to print lines L1, L2, L3, L4, L5, L6, L7, L8, L9, and L10 can be optimized by choosing the order in which each line is printed with respect to other lines and the directions in which the lines are printed. That is, the optimization results in an order in which each line is printed and printing direction along each line.

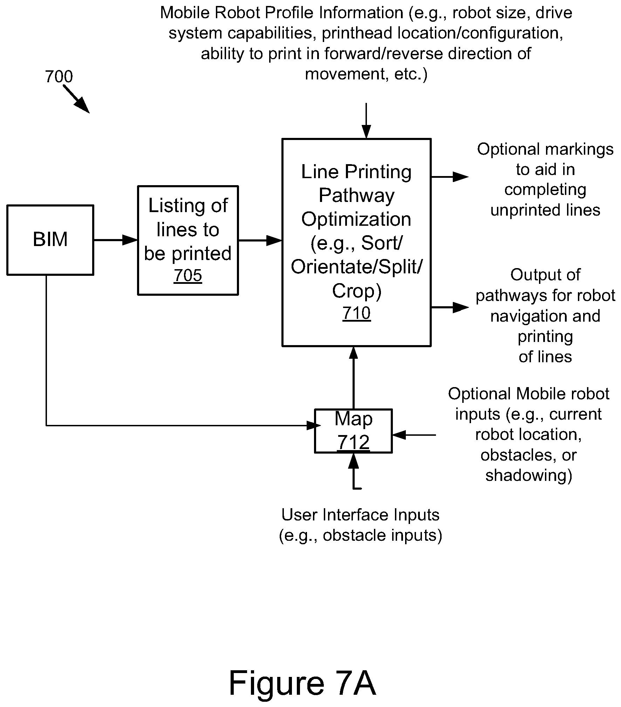

Figure 7A illustrates a block diagram showing the data sources used by the LPPO to optimize the lines drawn by the robot. Some of the data may be extracted or processed before being used by the LPPO. Other data may be available in a configuration file, or may be hard coded into the LPPO algorithm. For the data that needs to be extracted or processed, the processing could be conducted offline or it could be carried out by the robot in advance of starting to print. In some embodiments, the offline process is implemented in the cloud, or this process could be carried out on the user interface 114 of a portable computing device, or on the robot.

One of the required inputs are the physical capabilities of the robot. This is shown as the input at the top of the figure. The LPPO process may, for example, use profile information available on printhead configuration in regards to the arrangements of the printheads with respect to the robot's physical profile. For example, a mobile robot may have a single print element location at a fixed location on the mobile robot (e.g., in a front portion of a mobile robot). However, more generally, a mobile robot could have two or more print elements. And the print elements may be located at different portions of the mobile robot (e.g., a middle, back, or side portion of the mobile robot). As another example of profile information, the profile information may include the physical outline of the robot that can be used to determine if a particular print area is reachable. This permits determining if the robot can physically squeeze through an opening to reach an area to be printed.

Additionally, LPPO process may use profile information available on the driving and turning capabilities of the robot. For example, the robot's capabilities to pivot or turn around may depend on various factors, including details of its drive system, and the physical size and shape of the robot, and the location of safety sensors, such as cliff detection sensors. Additionally, depending on robot design, other aspects of the robot's drive characteristics may depend on whether it is driven forwards or backwards.

Additionally, the LPPO process in one embodiment uses available information on how the robot's printing characteristics differ between different directions of travel along a line. As previously discussed, in many cases a mobile robot will have a preferred forward direction for printing. That is, it moves along a line printing with a forward face of the mobile robot pointed forward towards a destination point. There are thus two directions with which a line can be printed. For example, the robot's profile, drive system, and print head arrangement may result in the robot only being able to print close to a particular wall along one direction of travel between two points. However, in some cases, the robot may have bidirectional printing capabilities and be able to print close to walls in both directions of travel between two points such as if the mobile robot had as printhead near the front portion of the robot and an additional printhead in the back portion of the robot.

While a mobile robot may a fixed position for a printhead, more generally a mobile robot may printhead on a movable stage. For example, the movable may be design to support a range of printhead positions. As a simple example, a printhead could have two or more discrete positions on a movable stage, such as a left, middle, and right lateral position. More generally, a movable stage could provide a continuous range of positions (e.g., - 10 cm to the left to +20 cm to the right). The movable stage could be manually movable or have an actuator to move the stage. In some implementations, the profile information used by the LPPO process includes information on options to move the stage (either manually prior to printing or dynamically via an actuator prior to printing individual lines of the layout). As an example, suppose that the printhead can be moved from left to right. In one implementation, the LPPO process also selects a position of a movable stage of the printhead for at least one line. For example, the printhead could be moved to optimize printing closer to one or more walls, such as moving the printhead to the left when driving along a wall to left of the robot and moving the printhead to the right when printing along a wall to the right of the robot.

In one embodiment, the BIM or CAD drawing is the source of the initial description of lines to be printed in block 705. The lines may correspond to at least a portion of a layout. For example, in an individual printing session, a mobile robot may print a portion of a layout or even an entire layout, depending on its speed of printing, what was printed on a previous day, the size of the building, etc. The listing of lines 705 may be generated inside or outside of the robot and may be selected by a user through a user interface. In addition to the lines to be printed, information on some or all of the jobsite obstacles may also be provided by the BIM and used to generate a map 712 that represents physical obstacles inside the area to be printed. However, the BIM may not necessarily include information on all obstacles at a jobsite. The presence of tools, pallets, or other temporary obstacles left on the jobsite must be obtained through other means. In some implementations, a user may input information to map 712 on obstacles at the jobsite. For example, the obstacles could be input from a user interface. More generally, obstacles could also be detected by a scanner at the jobsite, scanned using the total station and a reflector or, in some implementations, be scanned by the mobile robot itself.

Additionally, information on portions of the jobsite for which APD information is unavailable (e.g., by shadowing by obstacles) could also, in theory, be taken into account in some implementations. For example, in principle the line printing pathway optimization may take into account the presence/absence of an APD signal in portions of a jobsite. That is, a reduced position accuracy region within a shadowed region could be considered to be an obstacle to accurate printing.

In block 710, decisions are made for line printing pathway optimization. This results in an output corresponding to an optimization for navigating and printing lines of the layout. An optional additional output may include additional markings to be printed by the mobile robot to aid in later completing line sections of the layout that are not printed. This may include, for example, markings to aid a human user to fill in unprinted lines.

The optimization may include sorting, splitting, cropping, and orienting lines to form line printing pathways based on the listing of the lines, the map information, profile information of the mobile robot, and any other constraints on traversing the mobile robot and printing lines within a pre-selected printing standard for criteria such as accuracy, closeness to walls, and completeness, although other considerations could be considered, such as total time to print.

In some implementations, sorting categorizes lines based on various properties. For example, lines can be sorted based on criteria such as whether there is a potential problem in printing the line in one direction of travel along the line (one orientation) or both directions of travel (both orientations) along the line. More generally, other categorization criteria may be used to sort lines.

Orienting refers to selecting a directional orientation of a pathway with which to print a line between two points. A building layout typically includes numerous individual lines. For example, as a simple example, a horizontal line from point A to B may be printed from left-to-right or right to left. Thus, a line can be traversed in two directions. If, for example, a mobile robot has a single print head, then there may be a benefit to printing a line along one orientation or another. More generally, there may be a benefit to printing a sequence of lines with a specific orientation of each line that is printed. In order words, if we have a pre-selected standard for printability, then the printing result may vary depending on which directional orientation each individual line is printed. Additionally, the total print time may depend on some of the choices taken regarding the orientation with which individual lines of the layout are printed.

Cropping includes shortening a full line. For example, there may be an existing building structure or an obstacle preventing accurate printing along a section of a layout. In some cases, cropping may be performed to prevent the robot from hitting a wall, post, or other building structure or obstacle. Or there may, in some cases, be shadowing of an APD that prevents accurate location measurements along a portion of a layout. Cropping is a way to deal with a practical problem that it may be impossible or impractical to continue drawing a complete line.

Splitting includes splitting a line into at least two segments. Splitting permits, for example, printing the resulting post-split segments with different orientations in regards to the movement of the mobile robot. For example, instead of printing an entire horizontal line segment from left to right, splitting the line permits one of the split-off segments to be printed from left to right and the other to be printed from right to left. While a line can be split into two adjoining line segments, more generally a single line does not have to be split into equal portions and may also be split into more than two pieces. Splitting permits greater freedom to navigate a mobile robot and print lines with the printhead of the mobile robot in an optimal position for printing close to walls, posts, or other barriers to movement of the mobile robot.

The splitting may also be performed to split a line into pieces that avoid an obstacle. For example, if there is a pallet on a construction site, splitting a line may be perform to address the fact that the pallet blocks printing of a single continuous line.

Block 710 may be implemented in different ways. The algorithm may be stored as computer readable instructions on a storage medium and executed on a processor. The algorithm may be executed on a stand-alone device. For example, in one embodiment, it is executed on a user interface device in which the lines to be printed are selected and a user enters information on temporary obstacles. In one embodiment, the user interface device optimizes the lines before submitting them to the robot.

In another embodiment, the algorithm is executed on the robot. For example, the algorithm may be executed by the robot while the robot is performing a layout. This may be beneficial when, for example, the robot encounters an unexpected obstacle. For example, a robot having an obstacle detection capability may encounter a new obstacle that was not previously marked on the map 712. In this case, the robot would add the new obstacle to the map 712, remove the already printed lines from the list of lines to be printed 705, and re-run the LPPO algorithm 710.

The algorithm may also be used to identify whether particular selections of line sorting, line orientation, line cropping, and line splitting are beneficial for a particular layout and a particular set of mobile robot constraints on robot movement and robot print head arrangement. The algorithm may, for example, implement a fixed sequence of steps. More generally, the algorithm could evaluate different selections of orientations, line cropping, and line splitting based on criteria such as percentage of layout printed within a pre-selected accuracy and a total time to print.

The BIM model generally contains all information about the building including the line segments providing the outline of the walls to be built and the walls that are already existing in the site. This BIM can be used to generate a map on which the robot navigates and contains the obstacles that the robot will encounter when drawing the wall outlines onto the floor. For some types of construction, it is possible to extract all the relevant wall features automatically from a map. For example, all concrete columns are already built at the time of printing, or, in another example, all the exterior walls of the building are constructed before the layout is done.

However, in general, determining which wall segments or other portions of a structure already exist in the site may require input from a user to select or deselect features of the BIM model depending on whether they have already been built and exist on the construction site. For example, the existing structures could include walls, cliffs, holes, elevator shafts, or stairs of the building in at least a portion of the building that robot is working in to print on the building surface.

This selection could be done in the field office before the layout is performed using a computer system. Moreover, in some implementations, a user interface may be used by a user to input information on obstacles at the construction site.

In some implementations, a local scanning device is used to identify the existing structure information and/or obstacles. Another option is to use sensor on the mobile robot to identify existing structure information and/or obstacles at the construction site.

In some implementations, a user or operator of the robot makes a selection onsite of obstacles at the time the layout is performed. This can be done using a tablet or laptop computer that contains the BIM information and has a user interface that allows for selecting of features or editing of map data on the fly. In another approach, the user interface contains features that allow the user or operator to edit the data provided by the BIM model, allowing adjustments to be made to the locations of walls to account for "as built" conditions. For example, the actual wall location may be displaced by a ½ inch as compared to the location specified in the BIM model due to building tolerances, or a wall is displaced by several inches due to errors or adjustments that were made during the construction process. In this case the user interface may allow for both the adjustment of the existing walls, and adjusting the walls to be laid out by the robot to account for "as built" differences in the existing walls.

In any of these implementations, block 710 receives information containing a listing of lines to be drawn. Block 710 also receives information on boundaries for motion of the mobile robot such as existing walls, existing building structures, and obstacles. Block 710 also has information available to it regarding the mobile robot's abilities to move and print. This information is used to define a set of directional pathways for printing of the lines. The set of pathways and their associated orientations may include instructions for pivoting the robot, turning the robot, traversing forwards and backwards, navigating to starting points for drawing lines, etc.

Some examples of generating robot pathways includes making decisions for a driving direction with respect to endpoints of each line, decisions on robot orientation with respect to the driving direction (e.g., forward or reverse with respect to "front" and "back" faces of the mobile robot), decisions for where to start the drawing process, decisions on how to navigate to a starting point, and in some embodiments, decisions on adjusting robot driving, such as adjusting robot speed near walls.

In one embodiment, block 710 performs one or more of the following 6 decisions to optimize robot paths and orientation while printing.

First, one optimization is sorting and orienting lines to make them printable, within some printing standard, for a particular robot configuration and wall or obstacle location. For example, the lines may be sorted and an orientation for a direction of travel of the robot to print the line selected based on the arrangement of print heads on the mobile robot and whether the mobile robot is traveling parallel to a wall or approaching a wall head-on.

Second, one optimization is splitting lines to aid printing, such as splitting lines to allow printing lines up to walls in both directions. For example, a line that runs wall-to-wall may be split and printed as two different line segments based on factors such as the capabilities of a mobile robot to print proximate a wall depending on whether it is approaches the wall in a forward or reverse directional orientation with respect to some "front" end and "back" end of the mobile robot.

Third, one optimization is splitting a line based on detected or given obstacles and printing both sections of the split line towards or away from the obstacle.

Fourth, another optimization is sorting lines may be performed to reduce a total time it takes to print. For example, various factors besides total line path length can influence the total time to print the lines, including the time to pivot or turn the robot to navigate and orient the mobile robot for high quality printing of lines. Thus, sorting may be performed to select an order in which lines are printed to reduce a total print time.

Fifth, another optimization is cropping lines to take into account the physical limitations of the robot. For example, the mobile robot profile and arrangement of printheads may create physical limitations on how closely the mobile robot can print lines near walls or obstacles.

Sixth, another optimization is slowing the robot down as a printed line approaches a wall. Slowing the robot down facilitates accurate control of the mobile robot and aids in guiding the robot close to the wall.

Seventh, in some implementations, the optimization may combine two lines that can be printed more efficiently in one smooth motion. For example, two lines may be continuous and thus be more efficiently printed by combining them (e.g., a line from A to B and a line from B to C). As another example, two lines may overlap, such the may be more efficiently printed as one combined line.

Or in yet another example, multiple objects that fit within the width of one print swath (the width of the active printing area of the head, may be combined together and printed as one image. For example, if the robot has a print head that can print 1 inch wide, two parallel lines that are 5/8 inch wide representing either side of a drywall layer, can be printed simultaneously. In this case the two lines are combined together and printed in a single pass, or line. However, as this single "line" is printed, the information passed on the print head prints the image of the two parallel lines. In another example, there may be a line represented the face of a wall, and some text associated with the wall describing they type of wall material. The text and wall outline can be combined together into one image, printed in one swath. This combined image would be considered a single line by the algorithm since the printer can print all the information while the robot is following a single linear path. Furthermore, for a robot with a 6 inch wide print head, the entire wall with all of itsvarious layers, studs, and any text describing pipes, electrical, reinforcement, and other construction within the wall can be printed in a single pass. After combining these objects, this single swath would be considered a single line for the purposes of further optimization.

Some additional optional optimizations by block 710 may include some specific aspects of a mobile robot's drive system. This may include organizing the printing to include a line-tracking mode and a point-to-point mode. The point-to-point mode is a navigation mode in which the robot navigates itself to the beginning of a line, such as the first line segment. The robot then switches to the line-tracking mode to track a pre-defined line from the BIM model and print at the precise line location. When the robot finishes printing the line segment, the robot then switches to the point-to-point mode again to navigate to the beginning of the next line segment. This process repeats until the layout is complete. In this example, the choices between the navigation mode and the line-tracking mode may be selected to optimize one or more aspects of the printing process.

Another optimization is to take into account the mobile robot's capabilities to print in different driving directions along a line. An individual robot may have unidirectional or bidirectional printing characteristics. For example, it may print equally well in either of two directions of movement along a line between two endpoints of a line (with the robot having a front face orientated forwards).

In many situations, the BIM model may not contain all of the information about obstacles located on the site. For example, building materials, tools, or carts may be left on the floor where the robot is printing. The robot system may only become aware of these obstacles after the initial sorting of lines is complete. In this case, the robot may perform additional optimizations as it becomes aware of the obstacles. For example, if a cart is in the way and one of the lines to be printed passes under the cart, the robot may crop out that portion of the line and orient the line segments on either side to print as close as possible to the cart. Additionally, it may re-optimize other nearby segments, or the entire list of segments based on the new information to print faster or over a larger portion of the surface.

Thus, the LPPO 710 may include line sorting, line orienting, line cropping, line splitting and further include many other considerations, such as the presence of obstacles on the BIM, obstacles at the jobsite not found on the BIM, details about the printhead configuration and ability of the mobile robot to traverse the jobsite and accurately print in forward and reverse directions.

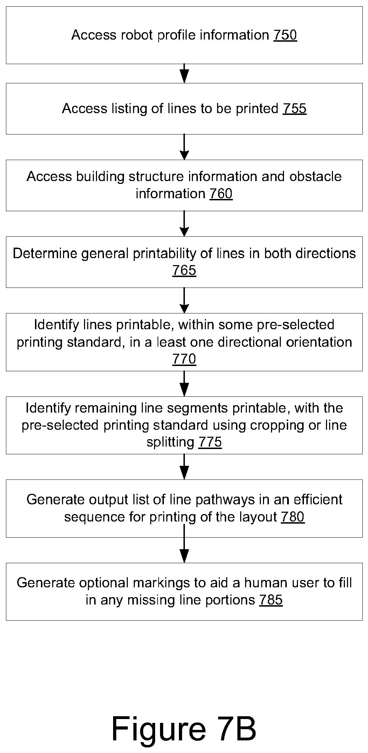

Figure 7B is a high-level flow diagram of an implementation of the optimization 710. Several blocks refer to receiving or otherwise accessing information from which to perform the optimization. Note that some of this information could also be hard-coded into the algorithm, depending on implementation details. In block 750 the robot profile information is accessed. For example, the robot profile information could include data fields defining, for example, the robot's physical profile, drive characteristics, print head arrangement, or any other information related to understanding how the mobile robot can be navigated and used to print a line. In block 755, the listing of lines to be printed is accessed. In block 760, existing building structure information and obstacle information is accessed. That is, in block 760 information is accessed regarding physical constraints on the movement of the mobile robot from whatever physical structures of the building exists and other obstacles on the jobsite (e.g., pallets, port-a-potties, or the like).

In block 765, an initial determination is made of individual lines that are printable, within some pre-selected individual standard, in both directions.

In block 770, a determination is made of any remaining lines that are printable, within the pre-selected standard, for at least one printing direction.

In block 775, a determination is made of which remaining lines are printable using cropping or line splitting.

In block 780, an output list of line pathways is generated which may include, for example, specific directional orientations for printing individual line segments, cropping of individual lines to avoid obstacles, and splitting of lines for various purposes, including changing the directional orientation of the robot during printing to improve printing quality or to avoid obstacles.

The output list of line pathways may include an efficient sequence to traverse the line pathways. For example, suppose, as a simplistic example, that a layout had a first set of lines that can be traversed in either direction, a second set of lines that can be traversed in only one direction, a set of cropped lines, and a set of split lines. There may be more than one option to print all of the line pathways. The algorithm may take into account the robot's ability to drive and navigate and select an efficient sequence to print the contents of the output list.

In block 785, an optional output may be generated that includes markings to aid a human user to complete any portions of the layout that are not printed.

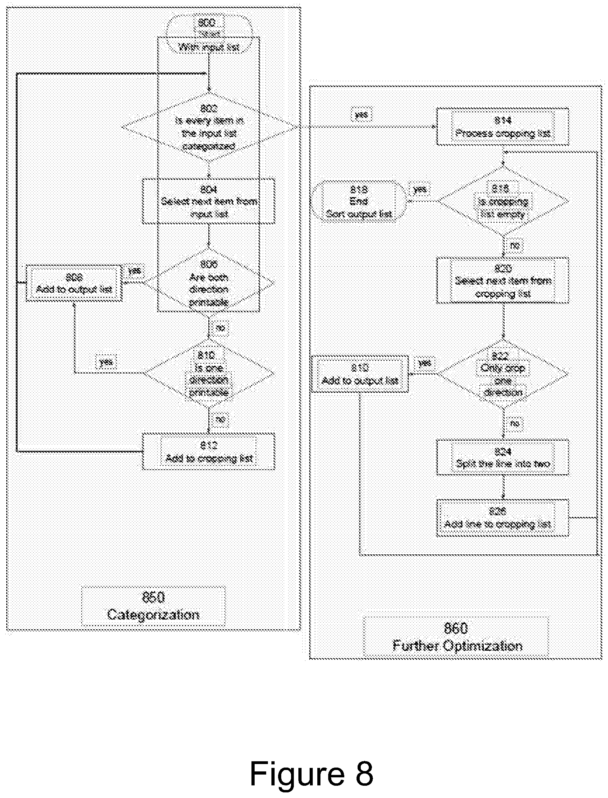

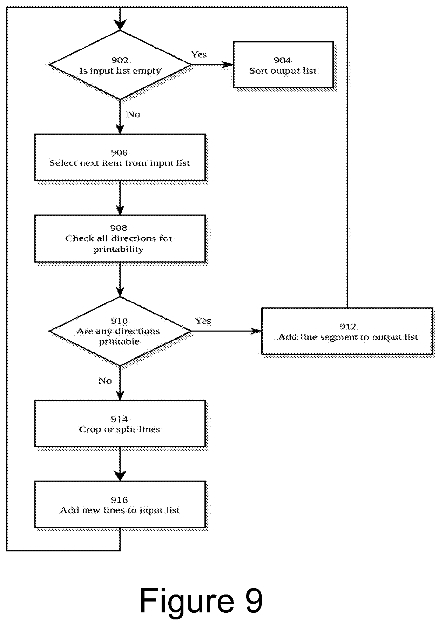

Some more detailed examples of an implementation of the optimization 710 are illustrated in the algorithms represented by the flowchart in Figs 8 and 9. In these examples, a list of lines called the input list is used to store all of the unprocessed lines and a list of lines called the output list is used to store all the lines output by the algorithm. Before executing the algorithm, the input list is populated with the list of lines to be drawn from the BIM file.

A first detailed example of an implementation of the optimization 710 is the algorithm represented by the flowchart in Fig. 8. As previously discussed, the input list represents the unprocessed list of lines and the output list represents the list of lines output by the algorithm. Before executing the algorithm, the input list is populated with the list of lines to be drawn from the BIM file. While the input list may correspond to a complete layout, more generally it may correspond to a portion of a layout to be printed.

Referring to Fig. 8, the optimization algorithm generally includes two parts 850 and 860. The first part categorizes all the items from the input list to either the output list or an intermediate list, called the cropping list in Block 812 in Fig. 8, which will be further optimized. The second part of the algorithm performs the secondary optimization for the cropping list.

In the first part 850, the algorithm selects a line item from the input list in step 802, if the input list is empty, then the algorithm automatically terminates to step 818 because there are no items to process. Otherwise, it categorizes the line into three different categories based on two checks in steps 806 and 810. Suppose one way to define a line is, but not limited to, two end points. The first check in step 806 involves checking whether the line is printable in both forward and reverse direction, with the forward direction starting from one end point to the other, and reverse is the opposite direction.

In one implementation, the line passes the check if the robot perimeter will not intersect walls, pillars, stairs, cliffs, or any other obstacles when the robot is drawing the line based on the map. If the line is printable in both directions, it is added to the output list in step 808 and the algorithm repeats by selecting the next item from the input list in step 802.

If the line is not printable in both directions, the second check 810 checks whether the line is printable in either the forward or the reverse direction in step 810. If the line is printable in either direction, then the line is added to the output list in step 808 and the algorithm repeats by selecting the next item from the input list in step 802.

If the line fails both checks of steps 806 and 810, then this line is added to the third category in step 812, which is a list collected for further optimization called the cropping list. All the lines in the cropping list require splitting or shortening, otherwise the robot would intersect with obstacles. The first part of the algorithm 850 repeats until all the items in the input list are categorized.

After all the items from the input list are categorized, the second part of the algorithm 860 further optimizes the cropping list. If the cropping list is empty, then the algorithm terminates to step 818. Otherwise, a line item is selected from the cropping list and determined whether this line needs to be shortened in one or both directions in step 822. This is done by checking whether the robot could start printing from either end point of the line without intersecting walls, pillars, stairs, cliffs, or any other obstacles based on the map. If there is one end point the robot could reach without being obstructed by obstacles, then the line is shortened from the opposite end point of the line to ensure that the robot, while printing, will not intersect any obstacles in the map. The cropped line is then added to the output list in step 810.

If the robot could not reach either end points of the line without its perimeter intersecting an obstacle from the map, then the line is split up based on all the intersections to the map in step 824. For example, if the line intersects with one wall segment, then it will be split up into two separate lines in step 824. These split up lines are then added back to the cropping list separately in 826. The algorithm then steps back to 816 and repeats by selecting the next item from the cropping list.

After all of the lines in the cropping list have been processed to the output list, the algorithm moves to the terminate state 818. The algorithm then sorts all lines based on distance traveled and valid traveling direction given by printing direction labels added in step 818 and constructs an efficient sequence for printing the resulting lines.

While not illustrated in Figure 8, shadowing of an APD that prevents accurate location measurements can also be included as a type of obstacle. For example, a pillar or a construction pallet may block line-of-sight APD measurements along a portion of a construction site. For example, a pillar could create shadowing in a portion of a jobsite. This may create a situation in which there is no physical obstacle to printing in a portion of a construction site but the degraded location measurements in the shadowed region may warrant creating a virtual obstacle region in the sense that highly accurate line printing may not be possible in a portion of the shadowed region.

A second detailed example of an implementation of the LPPO optimization 710 is the algorithm represented by the flowchart in Fig. 9. Referring to Fig 9, the algorithm first checks if the list is empty in step 902. If the input list is empty 902, then the optimization is complete because no further optimization is needed. If there are lines to be processed, the algorithm then selects the next line from the list in step 906. Then the optimization algorithm creates a list of all possible drawing directions for that line. The optimization algorithm then checks if the line can be printed for each of the drawing directions in the list 908. It does this by ensuring the robot perimeter will not intersect walls, pillars, stairs, cliffs, or any other obstacles when the robot is drawing the line based on the map. There are multiple cases where a line could not be drawn. One such case is when at one end of the line the robot intersects with an obstacle; at both ends the robot intersects with obstacles; at the middle of the line the robot intersects with an obstacle, and other cases where the optimization might determine a line is non-printable because the robot perimeter intersects with obstacles.

For each specific printing direction that intersects with an obstacle at one end of the line, the optimization would mark that printing direction as invalid. When the optimization algorithm is finished checking all of the directions, and a valid direction exists, the line is added to the output list 912. Additionally, the line in the output list will be labeled to indicate all the valid printing directions for that line so it can later be sorted efficiently by the sorting algorithm.

If the line cannot be printed from any direction, the optimization would decide to crop the line until it is obstacle free in step 914. The direction and length of cropping are done by successively shortening the line starting at the obstacle side until the line is completely obstacle-free.

In one case where both ends of a line are blocked by obstacles, the optimization would split the line in the middle to construct two connected but separate lines and add these two lines to the input list in order to repeat the optimization for these two lines. This is also carried out in step 914. After either splitting or cropping the lines in step 914, the new resulting lines are added back into the input list in step 916. This causes the new lines to be checked for printability before they are added to the output list.

After all of the lines in the input list have been processed, the algorithm moves to step 904. The optimization then sorts all lines based on distance traveled and valid traveling direction given by the printing direction labels added in step 912 and constructs an efficient sequence for printing the resulting lines.

While Figures 7B, 8, and 9 illustrates some examples of methods to optimize the line pathways, more generally other approaches could be used. For example, a machine learning model could be trained, based on training data, to take input data on a list of lines for a layout, robot profile information, and obstacles, and make decisions on line pathway orientations, line cropping, line splitting, and a sequence of printing to optimize criteria such as the percentage of the layout printed, printing speed, printing accuracy, etc.

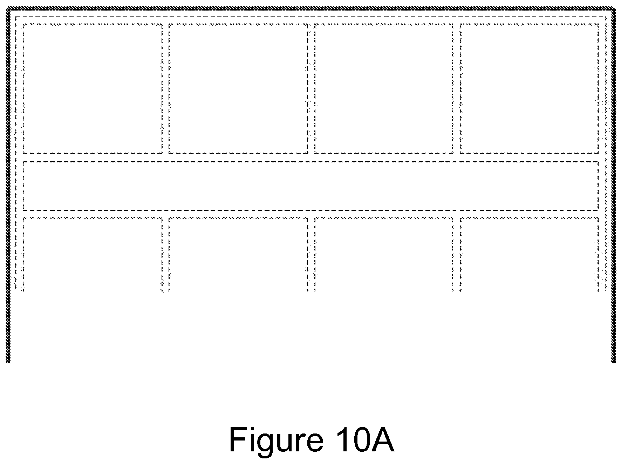

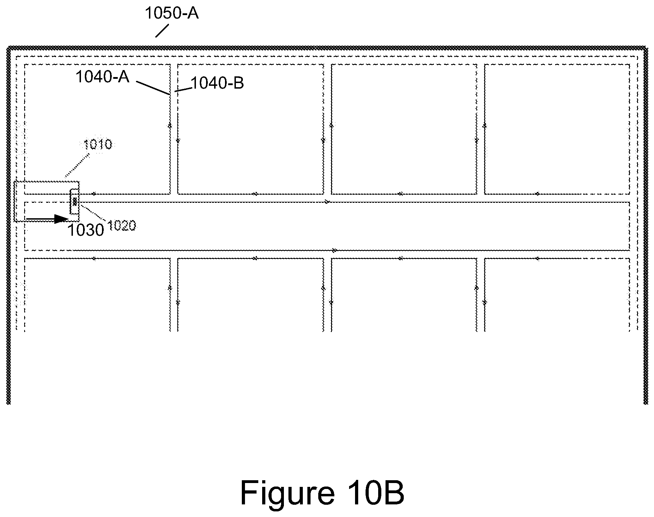

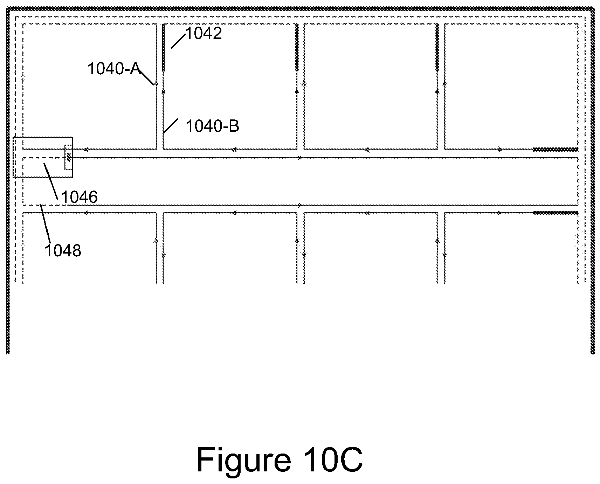

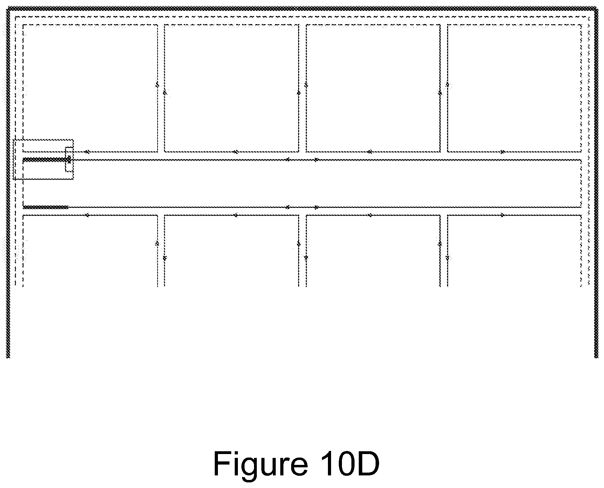

Some of the potential benefits of the LPPO are illustrated in Figures 10A, 10B, 10C, and 10D. Figure 10A shows the outer walls of the end of a building (dark lines) and the layout that needs to be printed on the floor (thin dashed lines). In this example, the layout includes two lines for each wall of the layout. As a practical matter, the mobile robot does not need to print the entire layout. Portions that are not printed by the mobile robot may be filled in by a human user. However, it is beneficial to print a high percentage of the layout by the mobile robot within a reasonable total printing time.

Figure 10B shows an example of same building after lines have been printed without applying LPPO. That is, Figure 10B illustrates what would happen for a mobile robot having a single print element 1020 if the mobile robot was instructed to attempt to draw the layout without taking into account constraints such as the location of the printhead, the profile of the mobile robot, and constraints on the movement of the mobile robot 1010. Again, in this example, the mobile robot is designed to print with a front face of the mobile robot facing forward, leading to potentially different printing results depending which of two different directions a line is printed.

The outline of a robot 1010 and the print element 1020, which is a dark line, inside the outline of the printer, is represented as a rectangular box. The robot 1010 shown in the figure, has the printer in the front of the robot. As it prints a line, the front-face of the robot faces the destination point. Thus, arrow 1030 indicates that the robot moves with its printhead facing forward along the direction of motion of the mobile robot along a line. This is further illustrated by the arrows along the layout.

The lines that have been printed on the ground are represented as thin solid lines, whereas unprinted lines are still represented by a dashed line. In this example, the direction the robot drives while it prints is not selected based on where the walls of the building are. Therefore, when printing lines that end near a wall, some of the lines are printed while driving toward the wall and other lines are printed while driving away from the wall. The direction the robot was driving while it printed the line is shown as an arrow embedded into the line. Due to the location of the printer on the robot, any line that starts at a wall and is printed while driving away from the wall cannot be fully printed. As seen in the figure, the lines will start approximately one robot length away from the wall. For example, line 1040-A was printed close to the wall 1040-A because the mobile robot while traveling towards the all with the print head 1020 ending up close to the wall. In contrast, line 1040-B is printed with the opposite direction of travel, i.e., away from the wall. This results in the print head 1020 starting further away from wall for line 1040-B, and hence less of the line is drawn than for line 1040-A.

As a practical matter, if the robot attempted to print the entire line 1040-B in the direction depicted, the robot would collide with the building wall shown in thick black lines. Therefore, the example illustrated in the figure assumes the robot has a safety mechanism that prevents the robot from colliding with the wall. That is, the safety mechanism allows the robot to start the line far enough away from the robot to prevent a collision. This safety mechanism would not be needed if the LPPO algorithm were used, since the lines would be cropped and sorted in such a way as to prevent collisions.

Figure 10C shows the same layout completed by the same robot, but using optimized line directions. In this case, an optimization algorithm has been run that chooses the direction of each line such that a larger portion of the lines can be printed up to the wall. Thus, for example lines 1040-A and 1040-B are now printed with the same direction. This permits an additional portion 1042 of line 1040-B to be printed, as indicated by the bold line. The portions of the lines that have been printed using these optimizations and could not be printed in the example given in Figure 10C are shown in with darker lines. This simple optimization has greatly increased the amount of lines that can be printed.

However, some of the lines, such as line 1046 and 1048 are still not complete. In particular, lines that extend from one wall to the other may have a missing section if we print them between their endpoints. In this example, lines 1046 and 1048 are printed with the mobile printing robot printing lines from left to right such that some portions are not printed.

Figure 10D shows the same layout completed by the same robot, however, in this case both the line directions are optimized and the lines are split to allow lines that extend from wall to wall to be fully printed. In this example, the two lines that extend from wall to wall are split into two lines. Each of the two lines are printed starting at the center and with the robot heading toward the wall. Again, the new area that can now be printed is shown as darker lines.

Note that in the example of Figure 10, there are no obstacles in the way of the lines, and there was no need to crop the lines to prevent the robot from colliding with a wall. Also note that in this example, the printer is located in the front center of the robot, so it is not physically possible to print the lines that run along the wall with this robot. However, a robot with a print element near the edge of the robot would be able to print the lines that run along the wall.

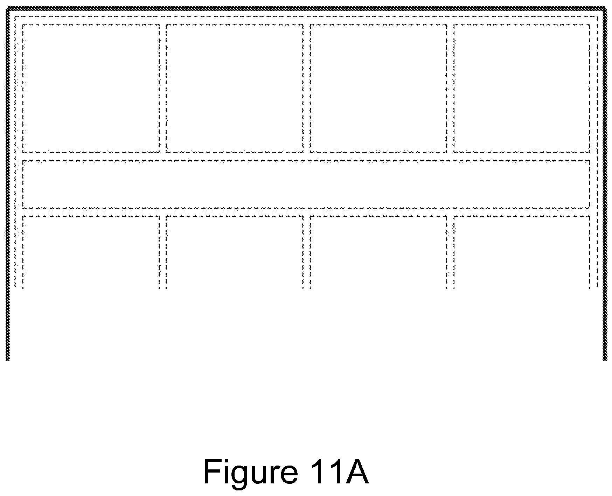

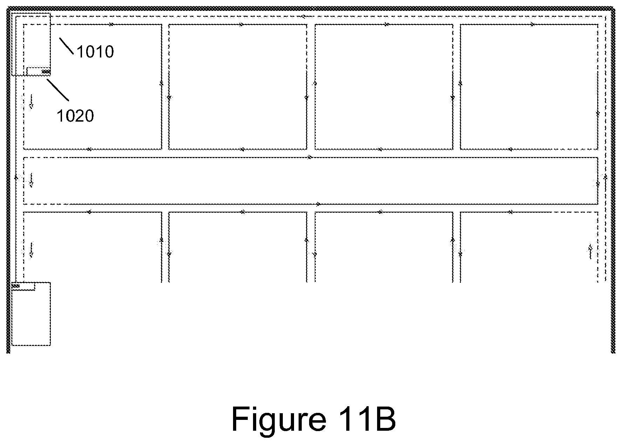

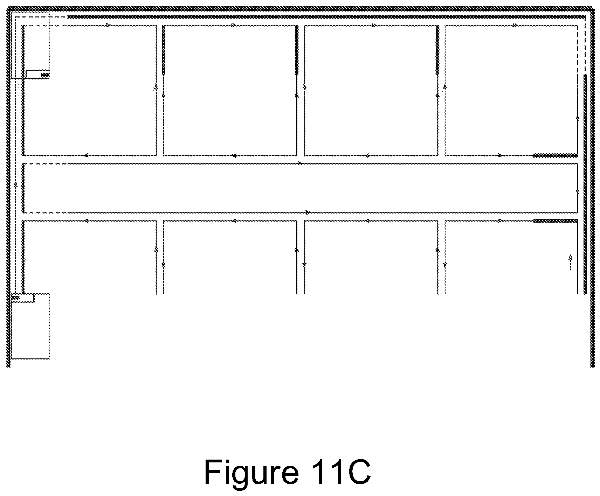

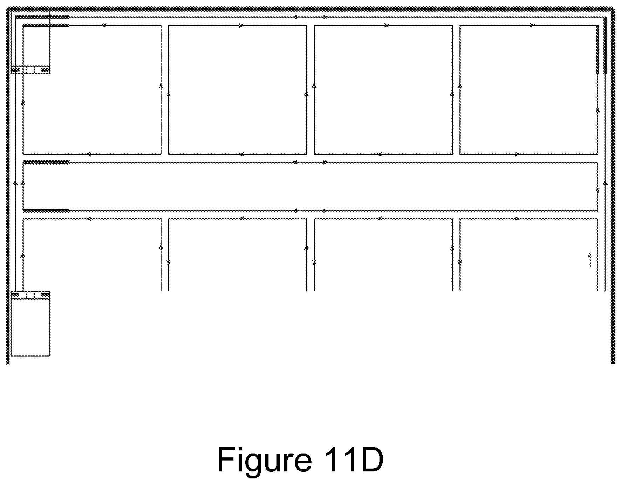

Figure 11 is another example showing the improvements possible with the optimization algorithm, this time using a robot that has the print elements along the wall. Figure 11A is identical to Figure 10A and shows both the location of the walls and the lines to be printed on the ground.

Figure 11B is analogous to Figure 10B, and is the portion of the layout that could be printed without using optimizations. In Figure 11B, random printing directions are chosen, and because the printer is now located at the side of the robot, some of the lines along the wall can be printed, but only if the robot's orientation is such that the printer is on the correct side.

Figure 11C is analogous to Figure 10C, and shows the improvement that can be gained by simply optimizing the print direction such that 1) the robot is always heading toward the walls when it is printing lines, and 2) the direction of the lines printed along the wall are chosen so that the print head is on the correct side of the robot so that the lines can be printed close to the wall.

Figure 11D is analogous to Figure 10D, and shows the improvement that can be gained when the lines are both optimized and when they are split to allow printing in both directions for some lines. In this example, it is also assumed that the robot has a print element on either side of the robot. This can be achieved by having two print elements, or it can be achieved with a print element on an actuated stage, such that it can be moved from one edge of the robot to the other. With a print element on both sides, the robot can complete lines that go along the back wall from side to side, by splitting the line in half, and printing each side separately, one with the left printer and one with the right printer. Again, the new line directions and additional lines that can be printed are shown in bold.

Note that in these examples, there are no unexpected obstacles in the space. An example of common obstacles are pallets or boxes of supplies, tool chests, temporary support structures, penetrations, safety barriers, port-a-potties, etc. If any of these are present and a line passes through the obstacle, the algorithm described in the embodiments would adjust the lines appropriately. It would crop the line such that the section passing through the obstacle is removed, and only the printable sections remain. It would then adjust the print direction and split any lines as necessary, such that the maximum amount of the area can be printed.

Also, as previously discussed, the algorithm could be adapted to account for any shadowing of an APD. For example, a post located at the edge of a layout could be an obstacle to APD measurements. Pallets could create shadowing of the APD. Regions of the layout that are shadowed could also be identified as virtual obstacles in terms of regions for which the position of the mobile robot cannot be accurately measured.

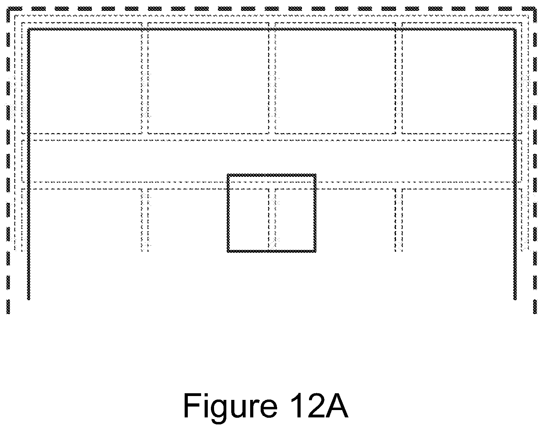

Figure 12A is another example showing a layout that needs to be completed, this time with obstacles that physically prevent the robot from completing the layout. In the figure, the dark dashed lines at the edge of the figure represent the edge of the building, where the walls will be constructed. Since this edge is a fall hazard, a safety rail, shown in the solid dark lines, has been placed a short distance from the edge. These rails are not in the BIM model, but could be entered by the user of the system on the job site. This rail blocks physical access to some portions of the lines to be printed, marked in dashed lines in the figure. In addition, there is a pallet of material on the floor, represented by the solid dark rectangular box in the middle of the figure.

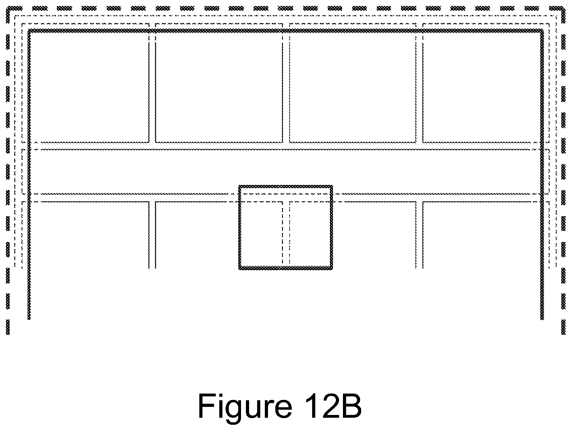

As an example, to print this layout on the ground the robot applies the optimization described. Although this allows printing of a maximal area, some areas cannot be printed. The resulting printed layout is shown in Figure 12B. During optimization, the algorithm removes some portions of the lines to prevent the robot from colliding with the various obstacles in the space. Many lines are cropped, some may be removed entirely, and some longer lines are split into multiple lines and then cropped appropriately such that only the printable portions are submitted to the robot.

In the scenarios shown in Figure 12, the portions of the layout that are inaccessible by the robot will need to be filled in manually. These areas need to be marked by a human after the robot has completed its layout. As is typical for layout not using a robot, the operator would need to read the drawings for the building, find the missing pieces, measure out their position, and mark them on the ground. However, this process can be greatly simplified by using the robot to make markings on the ground in the accessible areas to guide the human operator in making marks in the areas that can't be reached.

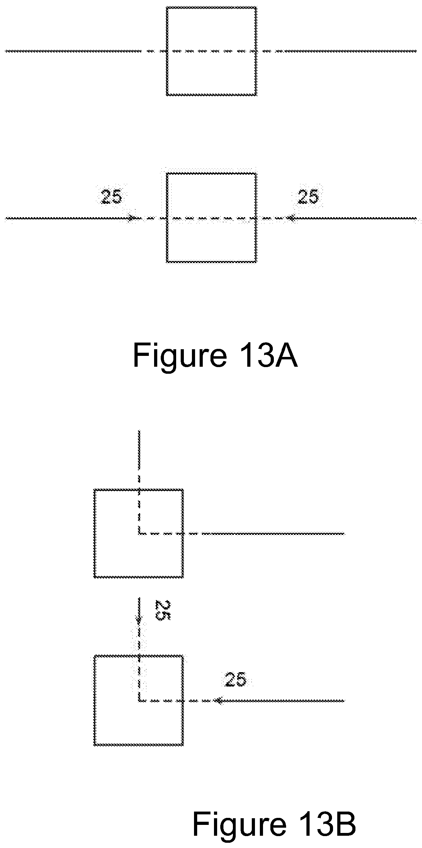

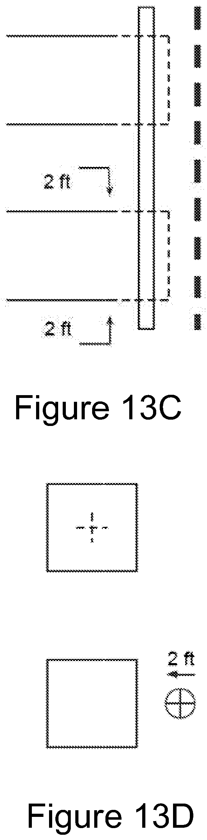

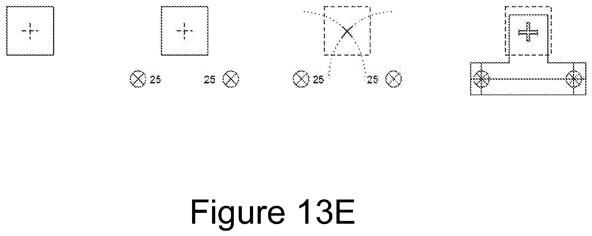

Figure 13 shows several examples of this. In each of the sub figures a layout that would typically be printed without human guides is show at the top, and a layout as completed by the robot with guides for a human is shown on the bottom. Figure 13A shows an example of a layout that requires lines, shown in dotted lines that extend through a pallet of materials, depicted as a solid box, at the top. The dotted portion could be printed by the robot. The bottom of the figure shows the same layout with human guides after being completed by the robot. The robot was only able to print the area outside of the pallet, and had to leave some margin, since the print element is not directly at the edge of the robot.

To ease the task of filling in the missing line once the obstacle has been removed, the robot also marked two arrows, and two unique identifiers "25" that were not given in the layout. These two arrows indicate to a human operator to extend the line through, and which direction the lines should be extended. The unique identifiers indicated that the two end points marked "25" need to be connected. Of course, many different indicators may be used. For example, the lines may only have the unique identifiers, or only have the arrows, or some other types of symbols or identifiers may be used to connect the lines together.

Also note, that the pallet is only given by way of example. The technique can be used for anything that blocks the robot from entering an area. This may include physical obstructions such as equipment, or fencing, but may also be other types of obstructions, such as puddles of water, depressions, wet paint or coatings, or even shadow areas created by objects that block the line of sight of the system's absolute positioning device. The area may be permanently inaccessible, or only be inaccessible during the time the robot is printing.

In another example shown in Figure 13B, the same obstacle is present, but the layout contains two lines that form a corner under the inaccessible area. As shown in the figure, the same technique is used to indicate which lines meet, and in which direction.

Figure 13C shows a different type of example. In the figure, the bold dashed line represents the edge of a building with a drop-off. This is the location of a future curtain wall that hasn't been constructed yet. To protect workers from the drop-off, a safety barrier was constructed, depicted in the figure as a thin rectangular box. Since the robot can't physically pass by the safety barrier, it is not able to print the layout near the edge of the building. Since the line does not connect though, but rather ends part way into the obstacle, the robot prints the distance that the lines need to be extended on the floor. In this example, that distance is 2 feet and indicated by the text "2 ft". The robot also prints a symbol indicating that after the lines are extended 2 feet, they should be connected to one another. Again the particular markings are to illustrate the technique, and other markings that convey the same information may also be used.

Figure 13D shows another example of a layout element obstructed by a pallet. In this example, the layout object is a point. Points are typically marked on the ground using two intersecting lines to mark the point with an "X". These points are used, for example, to place a hanger into the surface, or transferred directly up using a plumb laser to transfer the mark onto the ceiling, where a hanger will be placed. Points are also typically associated with text label that identifies the exact point (not shown in the figure).

In the layout shown in the figure, the point shown cannot be printed by the robot because it resides under the pallet of material left on the construction site. In other situations it may also be unprintable for a number of other reasons. The bottom of the figure shows what the robot has printed instead. To simplify the task for a human to complete later, the robot prints a point with an offset location and also prints text on the floor and an arrow indicating where the real point should be. In the example shown in the figure, the printed point is also inscribed in a circle to distinguish it from other points printed in the layout. The circle indicates to a human operator that the location shown is not the real point, and that the real point must be established with an offset off of the printed point. In addition, the robot would also print any text associated with the point to identify it. This is not shown in the figure.

One of the difficulties with marking the offset point shown in Figure 13D is that it's difficult to measure 2 ft at precisely the correct direction. Figure 13E shows a different way to mark a point that solves this issue. In the figure we again have a point that requires layout under a pallet, as shown on the left side. This time, instead of laying out a single offset point, the robot marks two offset points, both 2 feet from the point to be marked, but both outside of the area occupied by the pallet. This is shown on the second picture from the left. Note that these points again have a circle indicating that they are not final control points. To mark this point after the pallet is gone, the operator can mark two, 2 ft arcs, centered at each of the marked points. This will create an X precisely at the correct point. This is shown in the third figure from the left, where the location of the pallet that has now been removed is shown by a dashed line.

Finally, in an alternate approach shown in Figure 13E, the operator may carry a template to mark the correct point. This can be a clear plastic shape with alignment marks for the two points. The template is indicated by the solid "T" shaped outline in the figure. The operator places the template on the two existing control points, and the template has two slots through which the operator can draw the "X" in the correct location using a marking device.

It will be understood that while examples of included the specific case of a building layout, more generally the mobile robot may print lines for other types of construction layouts. For example, a mobile robot could print lines for temporary/movable walls in conference center layouts, cubicle layouts, etc. As another example, the layout could be a set of line for placing equipment, walls, dividers, and barriers, assembly lines, factory floors, data centers, etc.

While the robot may print straight lines, more generally it may also print curved lines (arcs) or other shapes. For example, many buildings have one more curved interior walls. For example, the lines that are printed can include any continuous feature that is printed in one swath of the print head corresponding to a single pass. That is, while a line to be printed is often a straight line, curved lines (arcs) may also be printed, as some building layouts have curved lines.

Also, while layout may also include text, symbols, and images as part of the layout. That is, the printing of lines is not exclusive of the robot printing other features of the layout.

In the above description, for purposes of explanation, numerous specific details are set forth in order to provide a thorough understanding of the present disclosure. However, it should be understood that the technology described herein can be practiced without these specific details. Further, various systems, devices, and structures are shown in block diagram form in order to avoid obscuring the description. For instance, various implementations are described as having particular hardware, software, and user interfaces. However, the present disclosure applies to any type of computing device that can receive data and commands, and to any peripheral devices providing services.

In some instances, various implementations may be presented herein in terms of algorithms and symbolic representations of operations on data bits within a computer memory. An algorithm is here, and generally, conceived to be a self-consistent set of operations leading to a desired result. The operations are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

To ease description, some elements of the system and/or the methods are referred to using the labels first, second, third, etc. These labels are intended to help to distinguish the elements but do not necessarily imply any particular order or ranking unless indicated otherwise.

It should be borne in mind, however, that all of these and similar terms are to be associated with the appropriate physical quantities and are merely convenient labels applied to these quantities. Unless specifically stated otherwise as apparent from the following discussion, it is appreciated that throughout this disclosure, discussions utilizing terms including "processing," "computing," "calculating," "determining," "displaying," or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Various implementations described herein may relate to an apparatus for performing the operations herein. This apparatus may be specially constructed for the required purposes, or it may comprise a general-purpose computer selectively activated or reconfigured by a computer program stored in the computer. Such a computer program may be stored in a computer readable storage medium, including, but is not limited to, any type of disk including floppy disks, optical disks, CD ROMs, and magnetic disks, read-only memories (ROMs), random access memories (RAMs), EPROMs, EEPROMs, magnetic or optical cards, flash memories including USB keys with non-volatile memory or any type of media suitable for storing electronic instructions, each coupled to a computer system bus.

The technology described herein can take the form of an entirely hardware implementation, an entirely software implementation, or implementations containing both hardware and software elements. For instance, the technology may be implemented in software, which includes, but is not limited to, firmware, resident software, microcode, etc. Furthermore, the technology can take the form of a computer program object accessible from a computer-usable or computer-readable medium providing program code for use by or in connection with a computer or any instruction execution system. For the purposes of this description, a computer-usable or computer readable medium can be any non-transitory storage apparatus that can contain, store, communicate, propagate, or transport the program for use by or in connection with the instruction execution system, apparatus, or device.

A data processing system suitable for storing and/or executing program code may include at least one processor coupled directly or indirectly to memory elements through a system bus. The memory elements can include local memory employed during actual execution of the program code, bulk storage, and cache memories that provide temporary storage of at least some program code in order to reduce the number of times code must be retrieved from bulk storage during execution. Input or I/O devices (including, but not limited to, keyboards, displays, pointing devices, etc.) can be coupled to the system either directly or through intervening I/O controllers.

Network adapters may also be coupled to the system to enable the data processing system to become coupled to other data processing systems, storage devices, remote printers, etc., through intervening private and/or public networks. Wireless (e.g., Wi-Fi^{™}) transceivers, Ethernet adapters, and Modems, are just a few examples of network adapters. The private and public networks may have any number of configurations and/or topologies. Data may be transmitted between these devices via the networks using a variety of different communication protocols including, for example, various Internet layer, transport layer, or application layer protocols. For example, data may be transmitted via the networks using transmission control protocol / Internet protocol (TCP/IP), user datagram protocol (UDP), transmission control protocol (TCP), hypertext transfer protocol (HTTP), secure hypertext transfer protocol (HTTPS), dynamic adaptive streaming over HTTP (DASH), real-time streaming protocol (RTSP), real-time transport protocol (RTP) and the real-time transport control protocol (RTCP), voice over Internet protocol (VOIP), file transfer protocol (FTP), WebSocket (WS), wireless access protocol (WAP), various messaging protocols (SMS, MMS, XMS, IMAP, SMTP, POP, WebDAV, etc.), or other known protocols.

Finally, the structure, algorithms, and/or interfaces presented herein are not inherently related to any particular computer or other apparatus. Various general-purpose systems may be used with programs in accordance with the teachings herein, or it may prove convenient to construct more specialized apparatus to perform the required method blocks. The required structure for a variety of these systems will appear from the description above. In addition, the specification is not described with reference to any particular programming language. It will be appreciated that a variety of programming languages may be used to implement the teachings of the specification as described herein.

The foregoing description has been presented for the purposes of illustration and description. It is not intended to be exhaustive or to limit the specification to the precise form disclosed. Many modifications and variations are possible in light of the above teaching. As will be understood by those familiar with the art, the specification may be embodied in other specific forms without departing from the essential characteristics thereof. Likewise, the particular naming and division of the modules, routines, features, attributes, methodologies and other aspects are not mandatory or significant, and the mechanisms that implement the specification or its features may have different names, divisions and/or formats.

Furthermore, the modules, routines, features, attributes, methodologies and other aspects of the disclosure can be implemented as software, hardware, firmware, or any combination of the foregoing. Also, wherever a component, an example of which is a module, of the specification is implemented as software, the component can be implemented as a standalone program, as part of a larger program, as a plurality of separate programs, as a statically or dynamically linked library, as a kernel loadable module, as a device driver, and/or in every and any other way known now or in the future. Additionally, the disclosure is in no way limited to implementation in any specific programming language, or for any specific operating system or environment.

## Claims

1. A method of printing lines on a surface using a mobile printing robot, comprising:
accessing information describing a set of lines of a layout to be printed on a building surface;
receiving information identifying at least one object limiting motion of the mobile robot to traverse the building surface and print lines; and
selecting line pathways to navigate the mobile printing robot and print the set of lines, wherein the line pathway selection comprises splitting a line into line segments printable along opposite direction of motion of the mobile robot, and wherein the selecting of line pathways is chosen to optimize a percentage of the layout that is printed.

2. The method of claim 1, wherein the receiving information comprises receiving building structure information describing any existing building structures that constrain movement of the mobile robot, and
for example, wherein receiving information comprises receiving obstacle information describing at least one obstacle to movement of the mobile robot not described by the building structure information.

3. The method of claim 1, further comprising generating at least one marking to be printed by the mobile printing robot to aid a human user complete at least one line not completely printable by the mobile printing robot.

4. The method of claim 1, further comprising determining a directional constraint on an ability of the mobile printing robot to print a line in a first direction of movement along the line, and
for example, wherein the mobile printing robot has an arrangement of at least one print head in which an ability of the mobile robot to print lines near a wall depends on the direction of movement along the line with respect to the wall.

5. The method of claim 1, wherein the selection of line pathways is based at least in part on availability of positioning information for the mobile printing robot, or
for example, wherein the selection of line pathways comprises cropping at least one line of the building layout.

6. The method of claim 1, wherein the selecting line pathways to navigate the mobile printing robot and optimize the printing of the set of lines further includes performing at least one of sorting, cropping, and orientating lines.

7. The method of claim 1, wherein the optimization comprises identifying an obstacle in a portion of a line and performing at least one of cropping and splitting to print portions of the line not obstructed by the obstacle, or
for example, wherein the selecting of line pathways is chosen to perform at least one of: 1) increase a percentage of the layout that is printed and 2) reduce a time to print the layout.

8. A mobile robot system (104), comprising:
at least one mobile robot controller (295) and a mobile robot printing system configured to print on a building surface;
wherein the mobile robot system is configured to:
access information describing a set of lines of a layout to be printed on the building surface;
receive information identifying at least one boundary for motion of the mobile robot; and
select line pathways to navigate the mobile printing robot and print the set of lines, wherein the line pathway selection comprises splitting a line into two different line segments printable along opposite direction of motion of the mobile robot, and wherein the selecting of line pathways is chosen to optimize a percentage of the layout that is printed.

9. The mobile robot system of claim 8, wherein the optimization of the line pathways includes selecting a directional orientation with which at least one line is printed.

10. The mobile robot system of claim 8, wherein the mobile robot system is configured to print at least one marking for a human user to complete a portion of the building layout not printed by the mobile robot system.

11. The mobile robot system of claim 8, wherein the mobile robot system performs the optimization in response to detecting an obstacle to printing a line.

12. The mobile robot system of claim 8, wherein the mobile robot system prints the lines of the building layout with a direction of motion of the mobile robot system selected to preferentially direct a printing head of the mobile robot system proximate a wall of the layout.

13. The mobile robot system of claim 8, configured to further optimize the line pathways used to print the lines including at least one of cropping, sorting, or orientating at least one line of the building layout.

14. The mobile robot system of claim 8, wherein for a cropped line, the mobile robot prints the line and stops printing the line before the mobile robot hits an obstacle.

15. The mobile robot system of claim 8, wherein the mobile robot system performs at least one of cropping and splitting in response to a loss of positioning information to print a line within a printing quality standard.

## Patentansprüche

1. Verfahren zum Drucken von Linien auf einer Oberfläche unter Verwendung eines mobilen Druckroboters, umfassend:
Zugreifen auf Informationen, die einen Satz von Linien eines Plans beschreiben, der auf eine Gebäudeoberfläche gedruckt werden soll;
Empfangen von Informationen, die mindestens ein Objekt identifizieren, das eine Bewegung des mobilen Roboters zum Befahren der Gebäudeoberfläche und zum Drucken von Linien einschränkt; und
Auswählen von Linienwegen zum Navigieren des mobilen Druckroboters und zum Drucken des Satzes von Linien, wobei die Linienwegauswahl Teilen einer Linie in Liniensegmente umfasst, die entlang einer entgegengesetzten Bewegungsrichtung des mobilen Roboters druckbar sind, und wobei das Auswählen von Linienwegen so gewählt wird, dass ein Prozentsatz des gedruckten Plans optimiert wird.

2. Verfahren nach Anspruch 1, wobei das Empfangen von Informationen Empfangen von Gebäudestrukturinformationen umfasst, die vorhandene Gebäudestrukturen beschreiben, die eine Bewegung des mobilen Roboters einschränken, und wobei beispielsweise das Empfangen von Informationen Empfangen von Hindernisinformationen umfasst, die mindestens ein Hindernis für eine Bewegung des mobilen Roboters beschreiben, das nicht durch die Gebäudestrukturinformationen beschrieben wird.

3. Verfahren nach Anspruch 1, ferner umfassend Erzeugen mindestens einer durch den mobilen Druckroboter zu druckenden Markierung, um einem menschlichen Benutzer dabei zu helfen, mindestens eine Linie zu vervollständigen, die durch den mobilen Druckroboter nicht vollständig gedruckt werden kann.

4. Verfahren nach Anspruch 1, ferner umfassend Bestimmen einer Richtungseinschränkung hinsichtlich einer Fähigkeit des mobilen Druckroboters, eine Linie in einer ersten Bewegungsrichtung entlang der Linie zu drucken, und
wobei beispielsweise der mobile Druckroboter eine Anordnung mindestens eines Druckkopfes aufweist, bei der eine Fähigkeit des mobilen Roboters, Linien in der Nähe einer Wand zu drucken, von der Bewegungsrichtung entlang der Linie in Bezug auf die Wand abhängt.

5. Verfahren nach Anspruch 1, wobei die Auswahl von Linienwegen zumindest teilweise auf einer Verfügbarkeit von Positionsbestimmungsinformationen für den mobilen Druckroboter basiert oder
wobei beispielsweise die Auswahl von Linienwegen Abschneiden mindestens einer Linie des Gebäudeplans umfasst.

6. Verfahren nach Anspruch 1, wobei das Auswählen von Linienwegen zum Navigieren des mobilen Druckroboters und zum Optimieren des Druckens des Satzes von Linien ferner Durchführen von mindestens einem von Sortieren, Abschneiden und Ausrichten von Linien umfasst.

7. Verfahren nach Anspruch 1, wobei die Optimierung Identifizieren eines Hindernisses in einem Abschnitt einer Linie und Durchführen von mindestens einem von Abschneiden und Teilen umfasst, um Abschnitte der Linie zu drucken, die nicht durch das Hindernis blockiert werden, oder
wobei beispielsweise das Auswählen von Linienwegen so gewählt wird, dass mindestens eines der Folgenden durchgeführt wird: 1) Erhöhen eines Prozentsatzes des gedruckten Plans und 2) Reduzieren einer Zeit zum Drucken des Plans.

8. Mobiles Robotersystem (104), umfassend:
mindestens eine Steuerung (295) für einen mobilen Roboter und ein Drucksystem für einen mobilen Roboter, das zum Drucken auf eine Gebäudeoberfläche konfiguriert ist;
wobei das mobile Robotersystem so konfiguriert ist, dass es:
auf Informationen zugreift, die einen Satz von Linien eines Plans beschreiben, der auf die Gebäudeoberfläche gedruckt werden soll;
Informationen empfängt, die mindestens eine Begrenzung für eine Bewegung des mobilen Roboters identifizieren; und
Linienwege zum Navigieren des mobilen Druckroboters und zum Drucken des Satzes von Linien auswählt, wobei die Linienwegauswahl Teilen einer Linie in zwei verschiedene Liniensegmente umfasst, die entlang einer entgegengesetzten Bewegungsrichtung des mobilen Roboters druckbar sind, und wobei das Auswählen von Linienwegen so gewählt wird, dass ein Prozentsatz des gedruckten Plans optimiert wird.

9. Mobiles Robotersystem nach Anspruch 8, wobei die Optimierung der Linienwege Auswählen einer Richtungsausrichtung umfasst, mit der mindestens eine Linie gedruckt wird.

10. Mobiles Robotersystem nach Anspruch 8, wobei das mobile Robotersystem so konfiguriert ist, dass es mindestens eine Markierung druckt, damit ein menschlicher Benutzer einen Abschnitt des Gebäudeplans vervollständigen kann, der nicht vom mobilen Robotersystem gedruckt wurde.

11. Mobiles Robotersystem nach Anspruch 8, wobei das mobile Robotersystem die Optimierung in Reaktion auf Erkennen eines Hindernisses für das Drucken einer Linie durchführt.

12. Mobiles Robotersystem nach Anspruch 8, wobei das mobile Robotersystem die Linien des Gebäudeplans mit einer Bewegungsrichtung des mobilen Robotersystems druckt, die so gewählt ist, dass ein Druckkopf des mobilen Robotersystems vorzugsweise in die Nähe einer Wand des Plans gelenkt wird.

13. Mobiles Robotersystem nach Anspruch 8, das so konfiguriert ist, dass es die zum Drucken der Linien verwendeten Linienwege weiter optimiert, einschließlich mindestens eines von Abschneiden, Sortieren oder Ausrichten mindestens einer Linie des Gebäudeplans.

14. Mobiles Robotersystem nach Anspruch 8, wobei der mobile Roboter bei einer abgeschnittenen Linie die Linie druckt und das Drucken der Linie beendet, bevor der mobile Roboter auf ein Hindernis trifft.

15. Mobiles Robotersystem nach Anspruch 8, wobei das mobile Robotersystem in Reaktion auf einen Verlust von Positionsbestimmungsinformationen mindestens eines von Abschneiden und Teilen ausführt, um eine Linie innerhalb eines Druckqualitätsstandards zu drucken.

## Revendications

1. Procédé d'impression de lignes sur une surface au moyen d'un robot d'impression mobile, comprenant :
l'accès à des informations décrivant un ensemble de lignes d'une disposition à imprimer sur une surface de bâtiment ;
la réception d'informations identifiant au moins un objet limitant le déplacement du robot mobile pour parcourir la surface de bâtiment et imprimer des lignes ; et
la sélection de trajectoires de lignes pour guider le robot d'impression mobile et imprimer l'ensemble de lignes, la sélection de trajectoires de lignes comprenant la division d'une ligne en segments de ligne imprimables dans des directions de déplacement opposées du robot mobile, et la sélection de trajectoires de lignes étant effectuée de manière à optimiser un pourcentage de la disposition qui est imprimé.

2. Procédé selon la revendication **1,** dans lequel la réception d'informations comprend la réception d'informations de structure de bâtiment décrivant toute structure de bâtiment existante qui contraint le déplacement du robot mobile, et
par exemple, dans lequel la réception d'informations comprend la réception d'informations d'obstacle décrivant au moins un obstacle au déplacement du robot mobile non décrit par les informations de structure de bâtiment.

3. Procédé selon la revendication 1, comprenant en outre la génération d'au moins un repère à imprimer par le robot d'impression mobile pour aider un utilisateur humain à compléter au moins une ligne qui n'est pas entièrement imprimable par le robot d'impression mobile.

4. Procédé selon la revendication 1, comprenant en outre la détermination d'une contrainte directionnelle sur l'aptitude du robot d'impression mobile à imprimer une ligne dans une première direction de déplacement le long de la ligne, et
par exemple, dans lequel le robot d'impression mobile présente un agencement d'au moins une tête d'impression pour lequel l'aptitude du robot mobile à imprimer des lignes à proximité d'un mur dépend de la direction de déplacement le long de la ligne par rapport au mur.

5. Procédé selon la revendication 1, dans lequel la sélection de trajectoires de lignes est basée au moins en partie sur la disponibilité d'informations de positionnement pour le robot d'impression mobile, ou par exemple, dans lequel la sélection de trajectoires de lignes comprend le rognage d'au moins une ligne de la disposition de bâtiment.

6. Procédé selon la revendication 1, dans lequel la sélection de trajectoires de lignes pour guider le robot d'impression mobile et optimiser l'impression de l'ensemble de lignes comporte en outre la réalisation d'un tri et/ou d'un rognage et/ou d'une orientation de lignes.

7. Procédé selon la revendication 1, dans lequel l'optimisation comprend l'identification d'un obstacle dans une portion d'une ligne et la réalisation d'un rognage et/ou d'une division pour imprimer des portions de la ligne non bloquées par l'obstacle, ou
par exemple, dans lequel la sélection de trajectoires de lignes est effectuée de manière à assurer : 1) une augmentation d'un pourcentage de la disposition qui est imprimé et/ou 2) une réduction d'un temps d'impression de la disposition.

8. Système de robot mobile (104), comprenant :
au moins un contrôleur de robot mobile (295) et un système d'impression par robot mobile configuré pour imprimer sur une surface de bâtiment ;
le système de robot mobile étant configuré pour :
accéder à des informations décrivant un ensemble de lignes d'une disposition à imprimer sur la surface de bâtiment ;
recevoir des informations identifiant au moins une limite pour le déplacement du robot mobile ; et
sélectionner des trajectoires de lignes pour guider le robot d'impression mobile et imprimer l'ensemble de lignes, la sélection de trajectoires de lignes comprenant la division d'une ligne en deux segments de ligne imprimables dans des directions de déplacement opposées du robot mobile, et la sélection de trajectoires de lignes étant effectuée de manière à optimiser un pourcentage de la disposition qui est imprimé.

9. Système de robot mobile selon la revendication 8, dans lequel l'optimisation des trajectoires de lignes comporte la sélection d'une orientation directionnelle selon laquelle au moins une ligne est imprimée.

10. Système de robot mobile selon la revendication 8, le système de robot mobile étant configuré pour imprimer au moins un repère pour permettre à un utilisateur humain de compléter une portion de la disposition de bâtiment qui n'est pas imprimée par le système de robot mobile.

11. Système de robot mobile selon la revendication 8, le système de robot mobile réalisant l'optimisation en réponse à la détection d'un obstacle à l'impression d'une ligne.

12. Système de robot mobile selon la revendication 8, le système de robot mobile imprimant les lignes de la disposition de bâtiment avec une direction de déplacement du système de robot mobile sélectionnée de manière à diriger préférentiellement une tête d'impression du système de robot mobile à proximité d'un mur de la disposition.

13. Système de robot mobile selon la revendication 8, configuré pour optimiser davantage les trajectoires de lignes utilisées pour imprimer les lignes, notamment par rognage et/ou tri et/ou orientation d'au moins une ligne de la disposition de bâtiment.

14. Système de robot mobile selon la revendication 8, dans lequel, pour une ligne rognée, le robot mobile imprime la ligne et interrompt l'impression de la ligne avant de heurter un obstacle.

15. Système de robot mobile selon la revendication 8, le système de robot mobile réalisant un rognage et/ou une division en réponse à une perte d'informations de positionnement afin d'imprimer une ligne dans le respect d'une norme de qualité d'impression.
